Europäisches Patentamt

European Patent Office

Office européen des brevets

(19)

(11) **EP 0 766 846 B1**

(12) **EUROPÄISCHE PATENTSCHRIFT**

(45) Veröffentlichungstag und Bekanntmachung des Hinweises auf die Patenterteilung:
**04.03.1998 Patentblatt 1998/10**

(21) Anmeldenummer: **95919968.8**

(22) Anmeldetag: **06.06.1995**

(51) Int Cl.6: **G05D 1/02**

(86) Internationale Anmeldenummer:
**PCT/DE95/00734**

(87) Internationale Veröffentlichungsnummer:
**WO 95/35531 (28.12.1995 Gazette 1995/55)**

(54) **VERFAHREN ZUR ORIENTIERUNG, FAHRWEGPLANUNG UND STEUERUNG EINER AUTONOMEN MOBILEN EINHEIT**

PROCESS FOR THE ORIENTATION, ROUTE PLANNING AND CONTROL OF A SELF-CONTAINED MOBILE UNIT

PROCEDE POUR L'ORIENTATION, L'ETABLISSEMENT D'UN ITINERAIRE ET LE PILOTAGE D'UNE UNITE MOBILE AUTONOME

(84) Benannte Vertragsstaaten:
**CH DE FR GB LI**

(30) Priorität: **22.06.1994 DE 4421805**
**12.10.1994 DE 4436477**

(43) Veröffentlichungstag der Anmeldung:
**09.04.1997 Patentblatt 1997/15**

(73) Patentinhaber: **SIEMENS AKTIENGESELLSCHAFT**
**80333 München (DE)**

(72) Erfinder: **BAUER, Rudolf**
**D-85579 Neubiberg (DE)**

(56) Entgegenhaltungen:
**US-A- 5 001 635**

- **IROS'93. PROCEEDINGS OF THE 1993 IEEE/RSJ INTERNATIONAL CONFERENCE ON INTELLIGENT ROBOTS AND SYSTEMS, YOKOHAMA, JAPAN , 26-30 JULY 1993, NEW YORK, USA, IEEE, USA, Seiten 2192-2197, XP 000452496 W. RENCKEN 'Concurrent localisation and map building for mobile robots using ultrasonic sensors' in der Anmeldung erwähnt**

**Beschreibung**

Für autonom operierende Einheiten sind unterschiedlichste Einsatzbereiche denkbar. Besonders geeignet sind sie zum Einsatz in Gefahrengebieten und zur Fernerkundung, aber auch in Gebäuden bieten sich für sie unterschiedlichste Tätigkeiten an. Dort können sie beispielsweise Tätigkeiten als Industriestaubsauger, Transportfahrzeuge in der Fertigungsindustrie, oder nicht zuletzt als bewegliche Vielzweckroboter durchführen. Bei der Verrichtung dieser unterschiedlichen Tätigkeiten stellt sich der autonomen mobilen Einheit jedoch das Problem, von einer zu Beginn unbekannten Umgebung eine Karte erstellen zu müssen und sich anhand dieser Karte in ihrer Arbeitsumgebung zu jedem gegebenem Zeitpunkt lokalisieren zu können. Zur Lösung dieses Problems besitzen solche autonomen Roboter meistens einen Steuerrechner und Sensoren, mit denen sie flexibel mit ihrer Umgebung in Wechselwirkung treten können. Beispiele für solche Sensoren sind Laser Entfernungsscanner, Videokameras und Ultraschallsensoren.

Die Verfahrensweise des Roboters sich während der Fahrt zu orientieren und gleichzeitig von der unbekannten Umgebung eine Landkarte aufzubauen, wirft das Problem auf, daß die Kartenbildung der Umgebung und die Lokalisierung des Roboters voneinander abhängen. Dabei spielt besonders die Art und Genauigkeit der Sensoren, mit denen der Roboter seinen zurückgelegten Weg vermißt bzw. mit welchen er in der Umgebung befindliche Hindernisse lokalisiert, eine große Rolle. Beispielsweise wird der von einem Ausgangspunkt aus zurückgelegte Weg mit Hilfe eines Radsensors ermittelt. Andererseits wird die Entfernung zu auftretenden Hindernissen mit Hilfe von Entfernungssensoren vermessen und diese werden als Landmarken in der Umgebungskarte eingetragen. Wegen der wechselseitigen Abhängigkeiten des Meßvorgangs zur Entfernungsbestimmung von Hindernissen und des Meßvorgangs der zurückgelegten Wegstrecke im Zusammenhang mit der Kartenbildung und der Fehler, welche die Meßsensoren aufweisen, kummulieren sich diese Fehler in Abhängigkeit der von dem Roboter zurückgelegten Wegstrecke.

So ist ab einer bestimmten Grenze eine sinnvolle Manövrierbarkeit der autonomen mobilen Einheit nicht mehr gegeben.

Von W.D. Rencken wurde mit dem Artikel "Concurrent Localisation and Map Building for Mobile Robots Using Ultrasonic Sensors", Proc. of the 1993 IEEE/RSJ. International Conference on Intelligent Robots and Systems, Yokohama, Jap. 26. bis 30. Juli 1993, Seite 2192 bis 2197 ein Verfahren vorgestellt, welches dieses Problem anspricht und eine Lösung dafür aufzeigt. Die bekannten Meßfehler der eingesetzten Sensoren werden dort dazu benutzt, um in Abhängigkeit einer zurückgelegten Wegstrecke eine anhand der internen Karte gefundene prädizierte Landmarkenposition zu korrigieren. Dadurch wird der absolute Meßfehler, der bei der Bewegung der autonomen mobilen Einheit auftritt, vermindert.

Eine weitere Methode zur Orientierung von selbstbeweglichen mobilen Einheiten in unbekannten Umgebungen, besteht darin, daß sich die Einheit ein zweidimensionales Gitter ihrer Umgebung aufbaut und einzelne Zellen dieses Gitters mit Belegungswerten versieht. Die je Gitterzelle vergebenen Belegungswerte repräsentieren das Auftreten von Hindernissen in der Umgebung.

Eine solche Methode gibt die Veröffentlichungsschrift "Histogrammic in Motion Mapping for Mobile Robot Obstacle Avoidence", IEEE Transactions on Robotics Automation, Vol. 7, No. 4. Aug. 1991 von J. Borenstein und Yoram Koren an. Dort wird beschrieben, wie mit Ultraschallsensoren eine Umgebungskarte einer selbstbeweglichen mobilen Einheit erstellt werden kann.

Der Vorgang des Kartenbildens in Verbindung mit ständiger Weiterfahrt und Neupositionierung des Roboters ist zeitaufwendig und erfordert Rechenleistung des Steuerrechners. Dies behindert den Roboter bei der Durchführung einer ihm zugewiesenen Tätigkeit.

Es ist deshalb äußerst wünschenswert, daß eine autonome mobile Einheit bei der Erledigung einer benutzerdefinierten Aufgabe nicht zuviel Zeit für Orientierungsaufgaben verwendet. Wichtig ist dabei jedoch auch, daß sie im Rahmen der gestellten Aufgabe immer ein definiertes Maß an Orientierungsgenauigkeit einhalten kann. Mit anderen Worten bedeutet das, der Positionierungsfehler des autonomen Roboters sollte eine gewisse Grenze nicht überschreiten, sonst würde dieser beispielsweise Briefe beim Postausteilen nicht mehr im Posteingangskorb ablegen können.

Die der Erfindung zugrundeliegende Aufgabe besteht deshalb darin, ein Verfahren zur Orientierung, Fahrwegplanung und Steuerung einer autonomen mobilen Einheit anzugeben, welches es der autonomen mobilen Einheit ermöglicht, von einem Startpunkt zu einem Zielpunkt eine möglichst kurze Strecke zu fahren, eine benutzerdefinierte Aufgabe durchführen zu können und dabei den Positionierungsfehler zu überwachen. Eine Teilaufgabe besteht darin die lokale Orientierung mit Hilfe eines Giterrasters zu verbessern.

Diese Aufgabe wird gemäß den Merkmalen des Patentanspruchs 1 gelöst.

Weiterbildungen der Erfindung ergeben sich aus den Unteransprüchen.

Ein Vorteil des erfindungsgemäßen Verfahrens besteht darin, daß für jede durchzuführende Teilaufgabe Bonus- und Maluswerte vergeben werden. Diese Bonus- und Maluswerte sind davon abhängig, inwieweit sie einer Erledigung einer benutzerdefinierten Aufgabe dienen und inwieweit und wie optimal das anzusteuernde Ziel erreicht werden kann. Besonders vorteilhaft wird dabei der Positionierungsfehler der autonomen mobilen Einheit ständig ermittelt und fließt in die Fahrwegplanung und Steuerung der autonomen mobilen Einheit ein. Somit können bei Erreichen eines bestimmten Schwellenwertes für den Positionierungsfehler geeignete Maßnahmen eingeleitet werden, mit denen dieser Fehler wieder vermindert werden kann.

Günstigerweise können für die unterschiedlichsten Teilaufgaben, welche diese autonome Einheit durchführen soll, Schwellenwerte für die Bonus- und Maluswerte festgelegt sein, so daß in Abhängigkeit dieser Schwellenwerte und deren Überbzw. Unterschreiten Sondermaßnahmen zur Erledigung dieser Aufgabe eingeleitet werden können bzw. diese Teilaufgabe vorrangig ausgeführt werden kann.

Vorteilhaft sieht es das erfindungsgemäße Verfahren vor, zur Verringerung des Positionierungsfehlers die autonome mobile Einheit zu einem bekannten Hindernis in der Umgebung zu steuern, dessen Position als Landmarke in der Umgebungskarte der Einheit sehr genau bekannt ist, diese zu vermessen, und mit Hilfe dieses Meßwertes ihre eigene Lage und die Lage der Landmarke in der Umgebungskarte zu korrigieren. So wird auf einfache Art der Positionierungsfehler genau zu dem Zeitpunkt an dem es nötig ist, vermindert.

Da die auftretenden Fehler bei der Wegmessung der Einheit von der zurückgelegten Wegstrecke abhängen, sieht es das erfindungsgemäße vorteilhaft vor, mindestens einen Maluswert vor der zurückgelegten Wegstrecke der Einheit zwischen einem Startpunkt und einem Zwischenziel bzw. zwischen demjenigen Punkt, an dem die letzte Orientierung durchgeführt wurde, abhängig zu machen.

Vorteilhaft sieht es das erfindungsgemäße Verfahren weiterhin vor, die Einheit möglichst in Richtung eines vorgegebenen Zielpunktes fahren zu lassen, indem in Abhängigkeit des Winkels den die aktuelle Fahrtrichtung mit der vorgegebenen Start-Zielrichtung bildet, ein Bonuswert vergeben wird.

Vorteilhafterweise sieht es das erfindungsgemäße Verfahren vor, den Bonuswert, der sich durch das Anfahren einer sich länglich erstreckenden bekannten Landmarke in der Umgebung ergibt, dadurch zu ermitteln, daß die Positionsunsicherheitsfläche auf die normale dieser Landmarke projiziert wird und die sich ergebende Strecke als Maß für den Bonuswert dient.

Vorteilhaft sieht es das erfindungsgemäße Verfahren vor, zur Verbesserung der Orientierung der autonomen mobilen Einheit die Position einer nicht sehr genau bekannten Landmarke in der Umgebungskarte zu verbessern, indem diese gezielt angefahren und vermessen wird. Durch die genaue Kenntnis mehrerer Landmarken in der Umgebungskarte wird der Einheit die Verminderung des Positionierungsfehlers an unterschiedlichsten Stellen auf ihrer Fahrt erleichtert.

Ein besonderer Vorteil der Erfindung besteht darin, daß die Kartenbildungsaufgabe dadurch erleichtert wird, indem die nähere Umgebung der automobilen Einheit in Zellen unterteilt wird. Diese Zellen werden anschließend mit Werten belegt, die es der Einheit erleichtern, ihre unterschiedlichen Teilaufgaben zu erledigen. Es ist dann z.B. sofort klar, ob sich im Sichtbereich eines Meßsensors ein Hindernis befindet, bzw. wie oft die Zelle bereits überfahren wurde, so daß davon ausgegangen werden kann, daß diese Zelle nicht hilfreich bei der Aufgabe zur Kartenbildung ist. Weiterhin wird durch die Speicherung von Vorzugsfahrtrichtungen je Zelle der Umgebungskarte sofort verdeutlicht, in welcher Richtung sich eine Landmarke, egal ob bestätigt oder unbestätigt befindet, so daß mit Hinblick auf die Kartenbildungsaufgabe und die Aufgabe zur Minimierung des Positionsfehlers entsprechend eine Landmarke angefahren werden kann und genau die Richtung bekannt ist, auf welchem Weg ein sinnvolles Meßergebnis erhalten wird.

Vorteilhafterweise kann man das erfindungsgemäße Verfahren auch mit bereits bekannten Orientierungsverfahren in zellular strukturierten Umgebungen kombinieren, indem man zusätzlich zu den im Anspruch 1 beanspruchten Zellenmerkmalen Belegungsgradwerte einführt, die eine Wahrscheinlichkeit für ein Hindernis in der Umgebungskarte angeben, was zu einer geringeren Rechenzeit bei der Fahrwegplanung der automobilen Einheit führt.

Vorteilhaft kann die Umgebungskarte in quadratische Zellen parzelliert werden, dadurch werden acht Fahrrichtungen möglich und der Rechenaufwand für eine Fahrwegplanung reduziert sich entsprechend.

Vorteilhafterweise kann die zellular strukturiete Umgebungskarte für das erfindunsgemäße Verfahren auch hexagonal strukturiert sein, damit wird es möglich, im Vergleich zu den quadratischen Gittern einen größeren Planungshorizont bei vergleichbarer Rechenleistung zu erzielen.

Besonders günstig ist es einen Planungsraum zu betrachten, in dem die verschiedenen diskreten Orientierungen des Fahrzeugs eine Achse ausmachen und die xy-Achse die anderen Achsen. In diesem Planungsraum kann jeder Fahrweg von einem anderen unterschieden werden. Vorteilhaft werden anschließend die Information, die je Zelle laut Anspruch 1 oder 2 abgespeichert werden sollen, in Ebenen übereinander angelegt, sodaß für jede Orientierung der Einheit die Hindenissituation im Planungsraum dieselbe ist.

Vorteilhaft ist es, den Planungsraum zu begrenzen und Fahrwege auszuwählen, die den günstigsten Bonus bzw. Maluswert liefern, da sie die Teilaufgaben der autonomen mobilen Einheit beispielsweise mit bester Resourcenschonung lösen. Mit dem Planungshorizont kann der Aufwand für die Berechnung des Fahrweges beschränkt werden.

Besonders günstig ist es, den resultierenden Nutzen aus verschiedenen Teilnutzen zusammenzusetzen und diese mittels Prioritäten zu gewichten, da so eine optimale Fahrwegplanung in Abhängigkeit der Wichtigkeit der unterschiedlichen Teilaufgaben möglich wird. Günstigerweise werden bei der Landkartenbildungsaufgabe verschiedenste Faktoren berücksichtigt, die einbeziehen wieviel Landmarken von einer Zelle aus sichtbar sind, wie die aktuelle Fahrtrichtung im Verhältnis zu den gespeicherten Vorzugsfahrtrichtungen ist, wie oft diese Zelle bereits überfahren wurde und das Verhältnis aus der Zahl der bestätigten und unbestätigten Landmarken als Gewichtungsfaktor mit einzubeziehen.

Vorteilhaft bieten sich zwei Arten an nach dem erfindungsgemäßen Verfahren den resultierenden Nutzen für einen einzelnen Fahrweg innerhalb einer Zelle zu berechnen, indem einmal der Bonuswert, der sich aus der Korrektur des Positionsfehlers ergibt additiv und das andere Mal multiplikativ gewichtet wird. In der Praxis ergeben sich auf diese Weise gute Fahrwege für die autonome mobile Einheit.

Im folgenden wird die Erfindung anhand von Figuren erläutert. Bei der Figurenbeschreibung wird auch die Terminologie des eingangs zitierten Standes der Technik zurückgegriffen.

Figur 1 zeigt ein Realisierungsbeispiel für das erfindungsgemäße Verfahren.

Figur 2 zeigt eine autonome mobile Einheit mit genau und weniger genau bekannten Landmarken.

Figur 3 gibt ein Fahrwegbeispiel einer autonomen mobilen Einheit in einer mit Hindernissen verstellten Umgebung in Verbindung mit dem Positionierungsfehler an.

Figur 4 zeigt ein Fahrwegbeispiel einer autonomen Einheit, welche das erfindungsgemäße Verfahren durchführt.

Figur 5 zeigt ein Beispiel für die Vergabe eines Bonuswertes.

Figur 6 zeigt eine autonome mobile Einheit in einer Umgebung.

Figur 7 zeigt eine zellular strukturierte Umgebungskarte mit einem Planungshorizont.

Figur 8 gibt Beispiele für die Reduzierung des Positionsfehlers an.

Figur 9 zeigt einen Fahrweg der sich aus diskreten Fahrtrichtungen zusammensetzt.

Figur 10 zeigt eine autonome mobile Einheit und mögliche Folgepositionen als Funktion der diskreten Fahrtrichtungen.

Figur 11 verdeutlicht die Berechnung des Bonuswertes für die benutzerdefinierte Aufgabe.

Figur 12 gibt Bewertungsfunktionen für den Besuchszähler einer Zelle und die Zahl, der von der Zelle aus erkennbaren unbestätigten Landmarken an.

Figur 13 zeigt den Fahrweg einer autonomen mobilen Einheit in einer a priori unbekannten Umgebung.

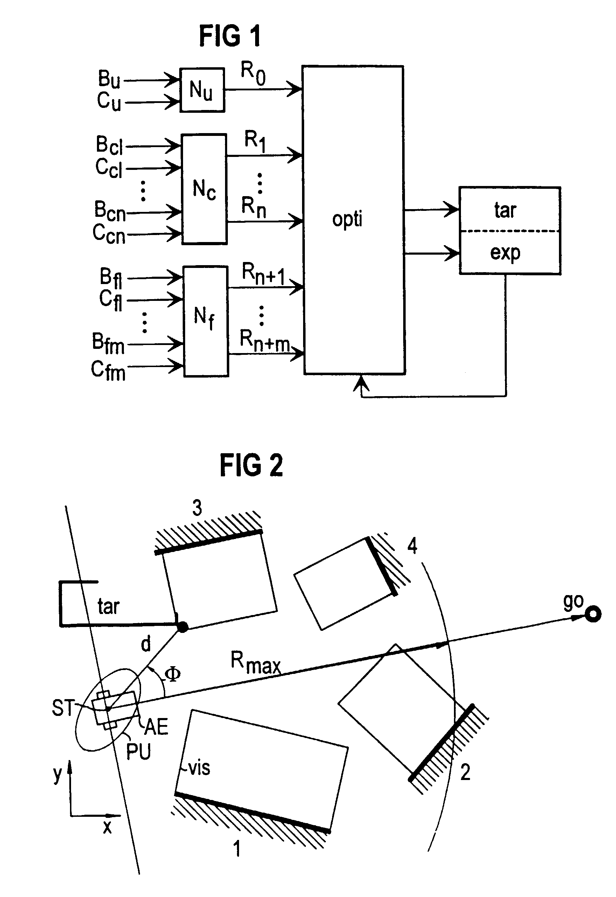

Figur 1 zeigt als Beispiel eine Architektur für das erfindungsgemäße Verfahren in Form eines Blockschaltbildes. Hier sind drei Aufgaben dargestellt, von denen die Notwendigkeitsfaktoren in das entsprechende Kästchen, welches jeweils die Teilaufgabe symbolisiert, eingetragen sind. Diese sind mit $N_u$, $N_c$ und $N_f$ bezeichnet. Der Index u wird hier für die benutzerdefinierte Aufgabe, d.h. beispielsweise Post austragen, Wände streichen oder ähnliche Dinge tun, wie sie bereits eingangs beim technologischen Hintergrund geschildert wurden verwendet. Mit der zweiten Aufgabe, welche den Index c erhält, wird die Positionsunsicherheit des mobilen Roboters überwacht. Die dritte Aufgabe, welche den Index f erhält, besteht darin, der Umgebungskarte neue Landmarken zuzuführen. Dies geschieht dadurch, daß die autonome mobile Einheit den von ihr zurückgelegten Weg vermißt und mit ihren Sensoren die Entfernung zu Hindernissen in der Umgebung bestimmt. Diese Hindernisse werden anschließend als Landmarken, in die Umgebungskarte welche die autonome Einheit mit sich führt, eingetragen.

Den einzelnen Teilaufgaben werden in dem dargestellten Architekturbeispiel Bonus- und Maluswerte mit B, bzw. C bezeichnet zugeordnet. Aus diesen Werten ergibt sich die Notwendigkeit für die Durchführung einer Aufgabe, welche zu einem Gewichtungsfaktor R führt, der in der Steuereinheit opti ausgewertet wird und aus dem beispielsweise ein Zwischenziel tar und ein Erwartungswert exp berechnet wird. In diesem Beispiel sind für die einzelnen Aufgaben zusätzlich Notwendigkeitsfaktoren $N_u$ $N_c$ und $N_f$ vergeben wurden. Zur Bestimmung der Gewichtungsfaktoren R kann beispielsweise die Differenz der Bonus- und Maluswerte für eine jeweilige Teilaufgabe gebildet werden und mit diesem Notwendigkeitsfaktor N zu einem Gewichtungsfaktor R multipliziert werden.

$$R(\phi) = N(B - C)$$

Ohne Beschränkung des Verfahrens können auch mehrere Teilprozesse durch die Steuerung opti bewertet werden. Es müssen in Abhängigkeit der gestellten Teilaufgaben lediglich die Bonus- und Maluswerte für die einzelnen Teilaufgaben bestimmt werden und fallweise kann es auch hier nützlich sein, einen Notwendigkeitsfaktor für die Durchführung einer solchen Teilaufgabe festzulegen. Die Bonus- und Maluswerte für die jeweilige Teilaufgabe werden sinnvollerweise so gewählt, daß solche Manöver, welche zur Lösung der benutzerdefinierten Aufgabe der mobilen Einheit U beitragen mit Bonuswerten versehen werden und solche, welche die mobile Einheit, beispielsweise von ihrer Fahrrichtung abbringen oder den Zeitablauf der Tätigkeit verzögern, mit Maluswerten versehen werden. Beispielsweise können Richttungsabweichungen von der vorgegebenen Start- Zielrichtung, die sehr klein sind, mit einem Bonuswert begünstigt werden, aber es können auch Positionsunsicherheiten, die eine bestimmte Größe überschreiten, mit einem Maluswert benachteiligt werden. Es ist auch denkbar, einen langen Fahrweg zwischen zwei Zwischenzielen auf dem Weg vom Startpunkt zum Zielpunkt durch große Maluswerte zu vermeiden. Auch ist es denkbar, daß durch eine geeignete Vergabe vom Bonus- und Maluswerten bei einer Umgebung, die viele Hindernisse enthält von der in der Landkarte der Einheit nur wenige genau bekannt sind, die Einheit dazu gezwungen wird, entsprechend mehr Hindernisse zu vermessen und als Landmarke in die Umgebungskarte einzutragen. Für die Vergabe vom Bonus- und Maluswerten eignet sich grundsätzlich alle Einflußfaktoren, welche im Zusammenhang mit der Fahrt des autonomen Roboters, oder der Durchführung der einzelnen Tätigkeiten, die ihm aufgetragen sind, stehen. Beispielsweise kann es auch günstig sein, das Zeitverhalten, die Fahrgeschwindigkeit, oder den Energieverbrauch der mobilen Einheit zu bewerten.

Für die Festlegung des Notwendigkeitsfaktors $N_c$, der die Teilaufgabe der Einheit die Positionsunsicherheit gering zu halten steuert, eignet sich beispielsweise die Fläche A, welche von der Positionsunsicherheit um den aktuellen Ort der mobilen Einheit herum, gebildet wird. Das heißt, damit ist jene Fläche gemeint, welche in Abhängigkeit der Sensormeßfehler, die sich über die Fahrt der Einheit sich kummulieren, einen wahrscheinlichen Aufenthaltsort um eine aktuell in der Karte eingetragene Position der Einheit herum angibt.

Beispielsweise kann für diese Notwendigkeit die Positionsunsicherheit zu korrigieren, die Fläche als Maß herangezogen werden. Falls die Fläche eine minimalen Wert min unterschreitet, kann beispielsweise verhindert werden, daß diese Teilaufgabe aktiviert wird, falls diese bestimmte Fläche einen bestimmten Wert max überschreitet, kann eine Durchführung dieser Teilaufgabe erzwungen werden. Im Zwischenbereich bietet es sich beispielsweise an, die aktuelle Fläche auf die Differenz des Minimus und des Maximums zu beziehen, um so linear in Abhängigkeit der aktuell vorhanden Positionsunsicherheitsfläche einen Notwendigkeitsfaktor für die Durchführung der Positionskorrektur zu erhalten. Es gilt zum Beispiel:

$$
N_c = \begin{cases} 0 & A \leq min \\[2mm] \dfrac{A - min}{max - min} & \text{sonst} \\[2mm] 1 & A \geq max \end{cases}
$$

Der Notwendigkeitsfaktor $N_u$ für die Durchführung der benutzerdefinierten Aufgabe kann beispielsweise davon abhängig gemacht werden, wieviel von dieser Aufgabe bereits erledigt wurde. Zur Beginn der Tätigkeit kann ein hoher Faktor vergeben werden und gegen Ende der Tätigkeit kann dieser vermindert werden. Beispielsweise gilt dabei für die Bonuswerte:

$$
B_u(\phi) = \begin{cases} 1 - \dfrac{|\phi - \phi_u|}{\pi/2} & \text{für } |\phi - \phi_u| < \pi/2 \\[3mm] 0 & \text{für } |\phi - \phi_u| \geq \pi/2 \end{cases}
$$

mit

$\phi$:     Winkel zwischen Start-Zielrichtung und aktueller Fahrtrichtung

Als Berechnungsgrundlage für die Bestimmung Notwendigkeit $N_f$ der Karte eine neue Landmarke zuzufügen, kann beispielsweise die Zahl der absolut detektierten Hindernisse in Verbindung mit der Zahl bereits bestätigten Hindernisse in der Karte verwendet werden. Das Verhältnis aus definiert bekannten Landmarken und ungenau bekannten Landmarken stellt ein sinnvolles Maß dafür dar, wie genau sich die Einheit aktuell orientieren kann und führt somit zu einen sinnvollen Gewichtungsfaktor für die Kartenbildungsaufgabe. Für den Maluswert der sich beim Ansteuern einer ungenau bekannten Landmarke ergibt gilt beispielsweise:

$$
C_t(\phi) = C_c(\phi) = \begin{cases} \dfrac{d(\phi)}{D\_max} & \text{für } d(\phi) < D\_max \\[3mm] 1 & \text{sonst} \end{cases}
$$

mit:

d:           aktuelle Fahrstrecke der Einheit

D_max:        Maximal zulässige Fahrstrecke

Um einen optimalen Fahrweg zu planen und anzusteuern, kann eine mögliche Strategie sein, eine Richtung auszuwählen, die möglichst viele Unterziele, d.h. Teilaufgaben, erfüllt. Es kann aber auch sinnvoll sein, beispielsweise zunächst jene Aufgabe durchzuführen, welche den maximalen Gewichtungsfaktor R erhält. Für eine sinnvolle Fahrwegplanung kann es aber auch sinnvoll sein, nur diese Zwischenziele auszuwählen, die sich innerhalb eines Winkels von 90° zwischen der Start-Zielrichtung und der aktuellen Bewegungsrichtung befinden, um möglichst wenig von der Fahrtrichtung zum Ziel abzuweichen.

Falls beispielsweise das Gewichtungsmaximum sich aus der benutzerdefinierten Aufgabe ergibt, wird beispielsweise die Entfernung zu einem Zwischenziel festgehalten. In den anderen Fällen, in denen die Gewichtungsfaktoren der anderen Teilaufgaben dominieren, wird beispielsweise als Entfernung der Weg in den Sichtbarkeitsbereich eines Hindernisses, wovon die Position bestimmt werden soll ermittelt und dient der Berechnung der Zielpunktkoordinaten für das Zwischenziel. Mit Sichtbarkeitsbereich ist der Bereich gemeint, in dem der Entfernungsmessungsensor mit hoher Genauigkeit die Position eines Hindernisses, d.h. seine Entfernung ermitteln kann. Beispielsweise wird hier im Falle der Kartenbildungsaufgabe oder der Positionskorrekturaufgabe ein Zwischenziel gewählt, daß sich am Rand des Sichtbarkeitsbereiches eines Hindernisses befindet.

Figur 2 zeigt ein Szenario als Beispiel für eine autonome mobile Einheit AE in ihrer Umgebung. Es ist erkennbar, daß hier die Position der Einheit in ihrer Umgebungskarte und die bekannten Hindernisse dargestellt sind, so wie sie die Steuerung der Einheit gespeichert enthält. Angegeben ist ein Startpunkt ST und ein Zielpunkt go. Mit $R_{max}$ ist beispielsweise ein Beobachtungshorizont bzw. ein Auswertungshorizont für Steuermaßnahmen und Zwischenziele der Einheit bezeichnet. Weiterhin ist ein Koordinatensystem xy angegeben, und es sind Hindernisse 1 bis 4 vorhanden. Die Hindernisse 1 und 2 sind beispielsweise in der Karte, welche die autonome mobile Einheit erstellt und für die Orientierung verwendet, als bestätigte Landmarken eingetragen. Das heißt, die Koordinaten dieser Hindernisse wurden öfters vermessen und liegen nun mit hoher Genauigkeit fest. Für Referenzzwecke, beispielsweise um die Posiitonsunsicherheit zu korrigieren, können diese Hindernisse 1 und 2 angefahren werden und mit einem Sensor vermessen werden. Die bestimmte Entfernung und die aktuelle Kenntnis der Lage der Hindernisse in der Karte dient dazu, die Positionsunsicherheit zu vermindern. Die Hindernisse 3 und 4 stellen keine solchen bestätigten Landmarken dar, sondern ihre Lage mit einer Ungenauigkeit behaftet. Beispielsweise wurden diese Hindernisse am Rande des Sichtbereichs der Sensoren erfaßt und sind noch nicht genauer vermessen worden. Eine erste Messung hat jedoch dazu geführt, daß diese Hindernisse in der Umgebungskarte eingetragen wurden.

Für die einzelnen Hindernisse, sowohl die Bestätigten 1 und 2 als auch die Unbestätigten 3 und 4 sind die einzelnen Sichtbarkeitsbereiche vis angegeben. Diese sind in Form von Rechtecken vis um die Landmarken herum beschrieben. Ein Sichtbarkeitsbereich ergibt sich aus dem Erfassungsbereich der Sensoren und aus der Abhängigkeit deren Meßgenauigkeit in Abhängigkeit von der Entfernung, welche der Sensor mißt und von der gewünschten Genauigkeit für bestätigte Landmarken. Um die Lage bzw. den Abstand eines solchen Hindernisses 1 bis 4 bestimmen zu können, muß der Sensor, welcher an der selbstbeweglichen mobilen Einheit AE angebracht ist, sich mindestens am Rande einer solchen Sichtbarkeitszone vis befinden. Dann ist eine exakte Entfernungsmessung möglich. Zur Verdeutlichung ist um die autonome Einheit AE eine Positionsunsicherheitfläche angezeichnet. Diese Fläche PU hat die Form einer Ellipse. Wie weiter erkannt werden kann, ist diese Ellipse nicht symmetrisch, um die Einheit herum angeordnet. Vielmehr ergibt sich der Drehwinkel der Ellipse in Relation zur Längsachse der Einheit AE dadurch, daß im Vorfeld vor Erreichen des Punktes ST unterschiedliche Fahrmanöver durchgeführt wurden, welche in den unterschiedlichen Richtungen xy des Achsenkreuzes zu einer verschiedenen Kumulation von Meßungenauigkeiten geführt haben.

In Figur 2 ist weiterhin ein Zwischenziel tar eingetragen. Der Abstand zwischen dem Startpunkt ST und dem Zwischenziel tar ist mit d bezeichnet. Der Winkel den die gewählte Fahrtrichtung zum Zwischenziel tar mit der Start-Zielrichtung ST-go einnimmt, ist mit $\phi$ bezeichnet. Ein Bonuswert, der im erfindungsgemäßen Verfahren Verwendung findet, kann beispielsweise von diesem Winkel $\phi$ abhängig gemacht werden. Sinnvoll wäre es diesen Winkel nicht größer als 90° werden zu lassen, da sonst keine Fahrt in Zielrichtung erfolgt. Im Beispiel in Figur 2 wurde ein Zwischenziel gewählt, welches sich am Rande des Sichtbarkeitsbereiches vis einer nicht bestätigten Landmarke 3 befindet. Das heißt die Bewertung der einzelnen Teilaufgaben in Verbindung mit den Bonus- und Maluswerten hat dazu geführt, daß die Kartenbildungsaufgabe $N_f$ durchgeführt werden soll. In Abhängigkeit der Notwendigkeitsfaktoren $N_u$, $N_c$ und $N_f$ in Verbindung mit den Gewichtungsfaktoren $R_0$ bis $R_{n+m}$ hat die Steuereinheit opti dieses Zwischenziel tar ermittelt, um es als nächstes anzusteuern. Weiterhin wird aufgrund der Positionsunsicherheit ein erwarteter Zwischenpunkt exp im Speicher der Einheit abgelegt. Ein solches Fahrmanöver der autonomen Einheit kann beispielsweise dann sinnvoll sein, wenn keine ausreichende Information über die Umgebung mehr vorliegen, oder wenn die Positionsunsicherheit stark angewachsen ist und keine bestätigten Landmarken in der Nähe der autonomen Einheit mehr vorhanden sind. Dies würde längerfristig dazu führen, daß sich die Positionsunsicherheit weiter vergrößert und der Weg zum Ziel go nicht mehr gefunden werden kann, da neue Landmarken nicht mehr genau bestimmt werden können und die aktuelle Position der Einheit dem Steuerrechner nicht mehr bekannt ist.

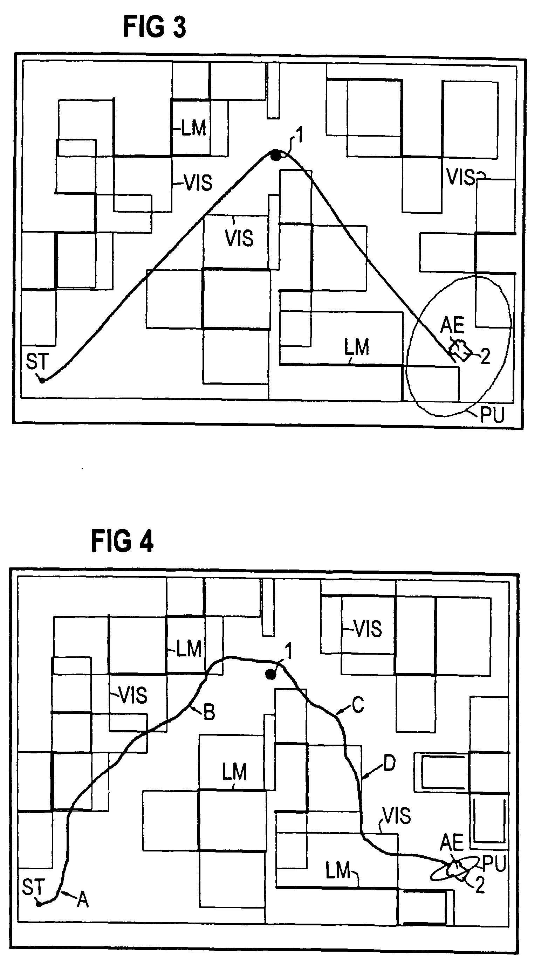

Figur 3 zeigt als Beispiel den zurückgelegten Weg vom Startpunkt ST zum Zielpunkt 2 einer autonomen Einheit AE. In diesem Beispiel wird das erfindungsgemäße Verfahren nicht angewendet. Einzelne Landmarken LM werden auf dem Weg zu einem Zwischenziel 1 erkannt und wie in Figur 3 dargestellt, fährt die autonome Einheit AE direkt zum Zwischenziel 1, ohne sich in die Sichtbarkeitszonen vis der einzelnen Landmarken LM zu begeben, um beispielsweise die Positionsunsicherheit zu korrigieren. Diese Positionsunsicherheit ergibt sich aus der Ungenauigkeit der Sensormessungen und der Akkumulation des Fehlers der einzelnen Sensoren über die zurückgelegte Wegstrecke der autonomen Einheit. Am Ziel 2 ihrer Fahrt angekommen, weist die dementsprechend die Position der autonomen Einheit eine sehr große Positionsunsicherheit PU, hier in Form einer Ellipse dargestellt, auf. Hier bedeutet dies, daß für den Steuerrechner der autonomen Einheit sich die Einheit am Ziel 2 befindet, jedoch ist durch die angewachsenen Meßfehler der einzelnen Sensoren der mobilen Einheit die Positionsunsicherheit auf die Ellipse PU angewachsen. Damit wird zwar ein aktueller Ort der Einheit in der Karte vermerkt, jedoch ist jeder Aufenthaltsort innerhalb der Positionsunsicherheitsfläche PU für die Einheit möglich. In Verbindung mit der Durchführung einer benutzerdefinierten Aufgabe kann leicht erkannt werden, daß der Einheit ein exaktes Positionieren wegen des großen Fehlers, charakterisiert durch die Positionsunsicherheit, nicht mehr möglich ist.

Figur 4 zeigt den Fahrweg einer autonomen Einheit AE durch eine mit Hindernissen verstellten Umgebung zwischen einem Startpunkt ST und einem Zielpunkt 2. Die Umgebung ist dabei die gleiche wie jene aus Figur 3. Auch hier sind wieder Landmarken LM und Sichtbarkeitsbereiche vis in der Umgebung dargestellt. Im Gegensatz zur Vorgehensweise in Figur 3 wird hier bei der Fahrwegplanung und Steuerung der autonomen Einheit das erfindungsgemäße Verfahren verwendet. Deutlich kann erkannt werden, daß die autonome mobile Einheit nicht mehr direkt zum Zwischenziel 1 und dann unmittelbar zum Endpunkt 2 fährt, sondern vielmehr führt der Fahrweg der Einheit durch mehrere Sichtbarkeitsbereiche vis von Landmarken. Dieser Fahrweg ergibt sich beispielsweise, wenn eine Teilaufgabe der Einheit darin besteht, die Positionsunsicherheit unterhalb eines bestimmten Schwellenwertes zu halten. Wie erkannt werden kann, überschreitet die Positionsunsicherheit in den Punkten A, B, C und D diesen Schwellenwert. Von der Steuereinheit wird durch Gewichtung der einzelnen Notwendigkeitsfaktoren in Verbindung mit den Gewichtungsfaktoren N und unter Bewertung der einzelnen Bonus- und Maluswerte B, C die Entscheidung getroffen, an diesen Stellen in Richtung des Sichtbarkeitsbereiches einer bekannten Landmarke LM zu verfahren. Durch Einfahrt in den Sichtbarkeitsbereich einer solchen Landmarke kann diese exakt vermessen werden und der so erhaltene Abstandswert kann mit dem Wert der sich aus der aktuellen Position in der Karte und der gespeicherten Position der Landmarke ergibt, verglichen werden. Auf diese Weise kann die absolute Positionsunsicherheit mit Hilfe dieser Messung vermindert werden. Wie leicht erkannt werden kann, wird durch die mehrmalige Anwendung dieses Verfahrens am Ende des Fahrweges im Zielpunkt 2 eine viel kleinere Positionsunsicherheit PU erreicht als dies bei Figur 3 der Fall war. So kann die autonome Einheit eine benutzerdefinierte Aufgabe mit höherer Exaktheit durchführen. Gleichzeitig wird aber auch durch das erfindungsgemäße Verfahren die Anzahl der Fehlerkorrekturmaßnahmen auf ein möglichst geringes Maß beschränkt. Daraus ergibt sich ein optimales Zeitverhalten bei der Durchführung einer benutzerdefinierten Aufgabe durch die autonome mobile Einheit.

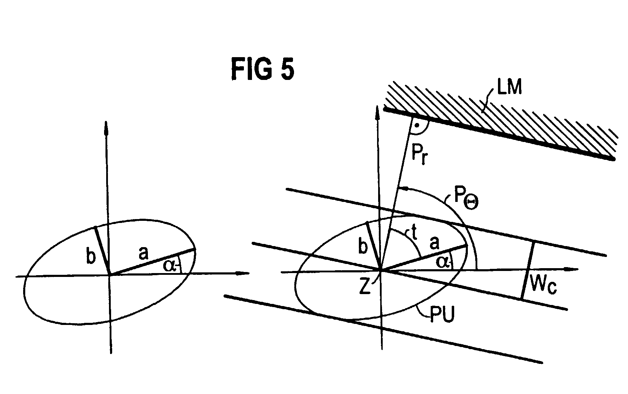

Figur 5 erläutert das Beispiel für die Vergabe eines Bonuswertes beim Anfahren eines sich länglich erstreckenden Hindernisses LM zur Positionskorrektur der autonomen mobilen Einheit. Die Einheit befindet sich am Ort Z vor der bestätigten Landmarke LM. Im Laufe der Fahrt der mobilen Einheit hat sich die Positionsunsicherheit zu einer Ellipse mit den Halbachsen b und a aufsummiert. Die Halbachse a bildet mit der Flächennormale zu dem sich länglich erstreckenden Hindernisse LM, welche mit $p_r$ bezeichnet ist den Winkel t und die Halbachse B bildet mit ihr den Winkel $\alpha$. Als Projektion der Ellipsenfläche auf die Flächennormale der Landmarke LM, wobei die Flächennormale mit $p_r$ bezeichnet ist, ergibt sich die Strecke $W_C$ als Maß für einen Bonuswert zur Durchführung der Positionskorrekturaufgabe. Hier ist als $W_C$ nur die halbe Strecke dargestellt, welche sich aus der Projektion der Ellipse auf die Flächennormale ergeben würde. Da in diesem Beispiel jedoch der Bonuswert proportional zu dieser Strecke gewählt wird, macht dies lediglich einen Faktor 2 aus und keine qualitativen Unterschied.

Die Position der Einheit zu einem gegebenen Zeitpunkt k läßt sich nach Rencken wie folgt angeben:

$$x(k) = \left[ x(k), y(k) \right]^T$$

Für die Positionsunsicherheit gilt dabei die Kovarianzmatrix:

$$Q(k) = \begin{bmatrix} \sigma_x^2 & \sigma_x\sigma_y \\ \sigma_x\sigma_y & \sigma_y^2 \end{bmatrix}$$

mit:

$\sigma_x$     Unsicherheit in x-Richtung
$\sigma_y$     Unsicherheit in y-Richtung

Die Umgebungskarte M(k), welche sich aus einer Karte für bestätigte Landmarken $M_c$(k) und unbestätigte Landmarken $M_t$(k) zusammensetzt, läßt sich dabei wie folgt formalisieren:

$$M(k) = \left\{ (P_f(k), \Lambda_f(k), vis) \,\middle|\, 1 \le f \le n_f \right\} = M_t(k) \cup M_c(k)$$

mit:

$\Lambda_f$(k)     Unsicherheit der Landmarke $p_f$
vis     Sichtbarkeitsbereich
$n_f$     Zahl der Landmarken

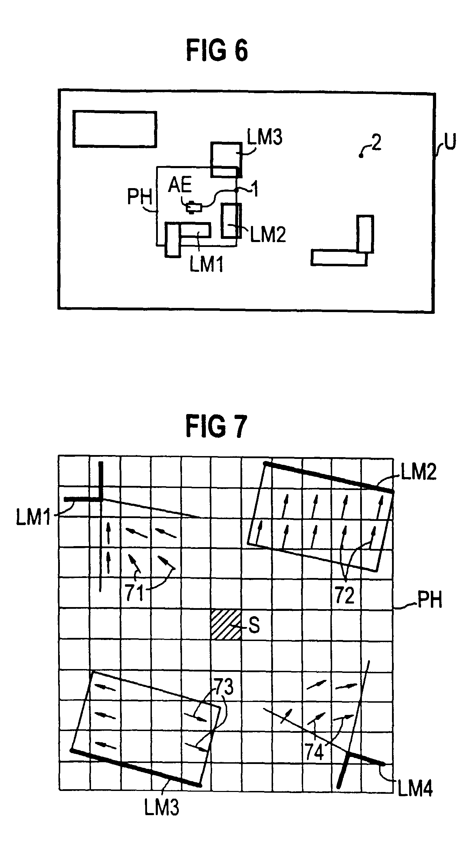

Figur 6 zeigt die Umgebung U einer autonomen Einheit AE. In der Umgebung U befindet sich ein Planungshorizont PH der autonomen mobilen Einheit. Innerhalb des Planungshorizontes sind Landmarken LM1 bis LM3 zu erkennen. Das Ziel 2 der autonomen mobilen Einheit befindet sich innerhalb der Umgebung jedoch außerhalb des Planungshorizontes PH. Um zum Ziel 2 zu gelangen, muß die Einheit zunächst nach dem erfindungsgemäßen Verfahren den Bereich im Planungshorizont zellular strukturieren und einen Fahrweg innerhalb dieses Planungshorizontes auskundschaften. Dieser Fahrweg führt zu einem Teilziel 1. Während ihrer Fahrt durch die Umgebung kann die Einheit beispielsweise den Planungshorizont mit sich führen, indem sie das Zentrum der zellular strukturierten Umgebungskarte immer mit sich führt und quasi den Planungshorizont wie ein Fenster über die Umgebung verschiebt.

Figur 7 zeigt eine zellular strukturierte Umgebungskarte innerhalb eines Planungshorizontes PH. Die Einheit befindet sich in diesem Fall im Zentrum der Karte in einer Startzelle S. Innerhalb der Umgebungskarte und des Planungshorizontes PH sind verschiedene Landmarken LM1 bis LM4 eingetragen. LM1 und LM4 sind dabei Kanten. LM3 und LM2 sind linienförmig sich erstreckende Landmarken.

Für die Landmarken LM1 und LM2 sind Pfeilrichtungen 71 und 72 angegeben, die eine bevorzugte Meßrichtung symbolisieren, in der die Einheit messen soll, um die jeweilige Landmarke genau vermessen zu können. Nach dem Verfahren von Rencken kann auf diese Weise der Positionsfehler einer Einheit verringert werden. Wie weiter erkannt werden kann, sind diese Pfeile innerhalb von Zellen gespeichert, die sich im Sichtbarkeitsbereich der jeweiligen Landmarke befinden. Sichtbarkeitsbereich bedeutet hier, daß die Landmarke von einem Entfernungsmesser der Einheit gerade noch zuverlässig erkannt werden kann. Hier in Figur 7 sind diese Zellen grau geschwärzt dargestellt. Die hier angegebenen Informationen, welche je Zelle gespeichert werden, sind in keinster Weise als vollständige Aufzählung zu betrachten, es ist durchaus denkbar, daß auch andere Informationen, die günstig sind für die Orientierung der autonomen mobilen Einheit je Zelle abgelegt werden können. Auch ist es denkbar, daß die Zellenrasterung gröber oder feiner gewählt wird. Hier wurde beispielsweise die Planungstiefe 5 gewählt, um den Rechenaufwand innerhalb der Steuereinheit der autonomen mobilen Einheit auf ein vertretbares Maß zu reduzieren.

Für die Zellen, die sich im Sichtbarkeitsbereich der Landmarken LM3 und LM4 befinden, sind auch bevorzugte Fahrtrichtungen abgespeichert, die hier mit 73 und 74 bezeichnet sind. Da es sich bei LM3 und LM4 um noch nicht bestätigte Landmarken handelt, weisen diese Pfeilrichtungen entlang der Landmarken, um in diesem Fall der autonomen mobilen Einheit, die diesen Fahrweg zurücklegt das Bestätigen oder Verwerfen einer Landmarke zu erleichtern. Falls ein Fahrweg, der geplant ist über eine mit einer Fahrtrichtung belegten Zellen führt, so kann bewertet werden, wie sich die Ausrichtung der Einheit in Relation zur gespeicherten Fahrtrichtung verhält und dieses Verhältnis als Maß für die Festlegung eines Bonuswertes für diesen aktuellen Fahrweg dienen.

Bei dem erfindungsgemäßen Fahren wird prinzipiell davon ausgegangen, daß ein bestimmtes Fernziel erreicht werden kann (z.B. fahre zu einem bestimmten Punkt, der sehr weit entfernt ist, exploriere Gebäudekomplex). Explizit geplant/gesucht werden jedoch nur Wege von wenigen Sekunden Fahrzeit im voraus, die nur einen Planungshorizont von einigen Metern benötigen.

Die während der Fahrt gesammelten Informationen über die nähere Umgebung der autonomen mobilen Einheit, wie Hindernisse und bestätigte und vorläufige Landmarken werden in einer lokalen Umweltrepräsentation gespeichert. Mit einem lokalen Bahnplanungsverfahren wird dann beispielsweise ein lokaler optimaler Fahrweg gesucht. Die Suche erfolgt beispielsweise, indem ausgehend vom momentanen Zustand der Einheit, erwartete Kosten und Nutzen entlang dieses Fahrweges abgeschätzt werden. Als Kosten können z.B. die Weglänge oder die zu erwartende Größe der Positionsunsicherheit betrachtet werden. Nutzen sind z.B. das Finden von neuen Landmarken, die Annäherung an einem von Anwender vorgegebenen Zielpunkt, oder das Reduzieren der Positionsunsicherheit. Bei der Aufstellung der Kosten- und Nutzenfunktionen werden beispielsweise Heuristiken verwendet, die sich aus Beobachtung und Analyse des verwendeten Lokalisierungsprozesses ergeben.

Das so gefundene optimale Wegstück wird dann beispielsweise von einer Steuereinheit des autonomen mobilen Roboters abgefahren, wobei unerwartete Hindernisse beispielsweise selbständig umfahren werden können. Während dieser Fahrt wird beispielsweise ständig überwacht, ob sich die bei der Planung angesetzten Erwartungen (z.B. Verhalten der Positionsunsicherheit) auch tatsächlich erfüllen. Bei erheblichen Abweichungen, die wegen der Unvollständigkeit des Umgebungswissens jederzeit möglich sind, wird beispielsweise eine neue Planung eingeleitet. Ansonsten wird nach dem Abfahren des geplanten Weges die Wegesuche erneut gestartet und ein weiteres Teilstück in einer lokalen Umgebung geplant. Dieser Prozeß erfolgt beispielsweise solange zyklisch, bis das vorgegebene Fernziel erreicht ist.

Um den Suchraum zu diskretisieren, wird die nähere Umgebung der autonomen mobilen Einheit (einige Meter) um die aktuelle Position der autonomen mobilen Einheit in Gitterzellen unterteilt. Diese befindet sich beispielsweise im Zentrum dieses Gitters. Die Gitterzellen werden mit Attributen belegt, welche die Informationen über die Umgebung widerspiegeln. Bei jedem Planungsvorgang wird beispielsweise das lokale Planungsgitter mit aktuellen Informationen aus unterschiedlichen Quellen belegt. Beispielsweise werden je Gitterzelle folgende Attribute abgelegt.

1. Ob sie sich im Sichtbarkeitsbereich einer Landmarke befindet. Der Sichtbarkeitsbereich hängt von der Reichweite und der Eigenschaften der Sensoren ab. Beispielsweise können Rechtecke bzw. Kreissegmente für Linien bzw. Punktlandmarken angenommen werden. Andere Sichtbarkeitsbereiche sind denkbar. Falls die Sensoren z.B. nur bei einer bestimmten Entfernung Landmarken erkennen können, könnten sich schmale Bänder als Sichtbarkeitsbereiche ergeben.

In solchen Zellen, welche im Sichtbarkeitsbereich einer oder mehrerer bestätigter Landmarken liegen, kann die Positionsunsicherheit verringert werden. Beispielsweise wird pro Landmarke die Matchrichtung abgespeichert. Für eine längliche Landmarke LM2, 72 beispielsweise steht diese Richtung senkrecht zur Wand. Bei Punktlandmarken LM1 jedoch liegt die Matchrichtung beispielsweise auf der Verbindungsgeraden vom Zellenmittelpunkt zur Landmarke 71. Kann von einer Zelle genau eine Landmarke gesehen werden, so kann die Positionsunsicherheit nur in Matchrichtung verringert werden. Können mehrere Landmarken gesehen werden, so kann die Unsicherheitsellipse in mehreren Richtungen gestaucht werden. Auch die Rotationsunsicherheit kann mit mehreren Landmarken verkleinert werden.

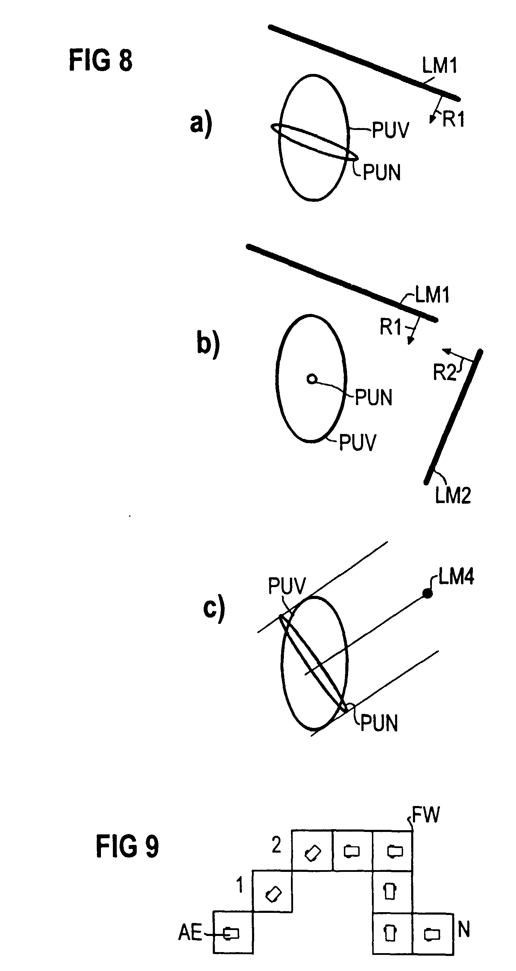

Figur 8 zeigt drei Situationen und damit verbundene Positionsunsicherheitskorrekturen. In Teil a) ist eine sich länglich erstreckende Landmarke LM1 zu sehen. Auf ihr senkrecht steht eine bevorzugte Meßrichtung R1. Diese Meßrichtung R1 wird beispielsweise in denjenigen Zellen abgespeichert, die sich innerhalb des Sichtbarkeitsbereiches einer auf einem beweglichen Fahrzeug angebrachten Entfernungsmeßsonde befinden, wenn diese gerade noch die Landmarke LM1 erfaßt. Beispielsweise kann es im Rahmen der unterschiedlichen Verrichtungen, welche die autonome mobile Einheit durchführt, erforderlich sein, eine Positionskorrektur durchzuführen und den angewachsenen beispielsweise durch Odometriefehler begründeten Positionsfehler wieder zu verringern. Das Verfahren von Rencken sieht vor, eine Landmarke mit Hilfe der Entfernungsmeßsensoren genau zu vermessen und über die bekannte Ausgangsposition der Einheit und die Positionsänderung, die sich aus der zurückgelegten Wegstrecke ergibt, eine Position zur Korrektur zu ermitteln. Vor dem Eintreffen im Sichtbarkeitsbereich der Landmarke ist die Positionsunsicherheit beispielsweise durch eine Ellipse PUV gegeben. Durch Bewegung der autonomen mobilen Einheit in Richtung R1, also senkrecht zur Landmarke, wird die Positionsunsicherheit in dieser Richtung verkleinert. Es ergibt sich schließlich die Positionsunsicherheits-Ellipse PUN.

Figur 8b) zeigt denselben Fall. Jedoch sind hier zwei Landmarken LM1 und LM2 vorhanden. Senkrecht dazu sind entsprechende bevorzugte Meßrichtungen R1 und R2 angegeben, in denen eine selbstbewegliche mobile Einheit eine Positionskorrektur durchführen kann. Dazu ist es nicht erforderlich, daß die Einheit exakt in diesen Richtungen mißt oder fährt, jedoch wird so durch ein Mindestmaß an Aufwand eine optimale Fehlerkorrektur erzielt. Im Vergleich zu 8a) kann erkannt werden, daß die Positionsunsicherheitsellipse PUV zu einer sehr kleinen Ellipse PUN schrumpft, da hier eine Positionskorrektur in zwei orthogonalen Richtungen durchgeführt werden kann und somit die Ellipse in beide Richtungen gestaucht wird. Hieraus wird plausibel, daß der Nutzen für eine Positionskorrektur von der Zahl der bestätigten Landmarken abhängt.

Figur 8c) veranschaulicht die Positionskorrektur im Zusammenhang mit einer punktförmigen Landmarke LM4. Der Sichtbarkeitsbereich kann sich beispielsweise um eine solche Landmarke wie folgt gestalten. Der maximale Meßbereich des Sensors wird als Strecke festgelegt und diese Strecke dient als Radius für einen Bogen der um LM4 als Zentrum geschlagen wird. Damit erhält man einen Kreisbogen. Zwischen diesem Kreisbogen und LM4 befinden sich Zellen, für die radial verlaufende optimale Fahrtrichtungen zum Erfassen der Landmarke LM4 abgelegt sein können. Es kann erkannt werden, daß die Positionsunsicherheit PUV mit Hilfe einer solchen Landmarke ebenso verkleinert werden kann, wie mit Hilfe einer sich länglich erstreckenden Landmarke. Man erhält die Positionsunsicherheitsellipse PUN nach der Korrektur.

Beispielsweise wird für jede Zelle, welche sich bezogen auf den Entfernungsmeßsensor der Einheit im Sichtbarkeitsbereich einer unbestätigten Landmarke befindet, eine bevorzugte Fahrtrichtung für die autonome mobile Einheit abgespeichert. Dabei wird davon ausgegangen, daß besonders in dieser Richtung die Landmarke optimal vermessen werden kann. Falls die Einheit sich länglich erstreckt und an den Längsseiten mehrere Entfernungsmeßsensoren parallel angeordnet sind, so können beispielsweise Wände besonders gut erkannt werden, wenn eine Vorzugsrichtung parallel zur Wand verläuft. Zusätzlich können Informationen darüber abgelegt sein, ob sich eine Zelle im Sichtbarkeitsbereich einer vorläufigen Landmarke befindet. Falls dies der Fall ist, wird in einer solchen Zelle eine bevorzugte Fahrtrichtung abgelegt, die dazu führen soll, daß die Landmarke schnell bestätigt oder endgültig verworfen werden kann. Eine solche günstige Fahrtrichtung (Bestätigungsrichtung) bei einer wandförmigen Landmarke liegt z.B. parallel zur Wand. Eine Ecke jedoch kann besonders gut als punktförmige Landmarke bestätigt werden, wenn die Einheit sie auf einer Kreisbahn umrundet. Je nach Typ des Entfernungsmeßsensors sind auch noch andere Kriterien denkbar (z.B. bevorzugte Entfernung zur Landmarke). Beispielsweise können für die Zellen, auch wie von Borenstein und Koren beschrieben, Belegungsgradwerte vergeben werden und dort die Zelle abgelegt sein. Diese Belegungsgradwerte geben die Aufenthaltswahrscheinlichkeit für ein Hindernis in dieser Zelle an.

Zusätzlich kann für jede Zelle ein Zähler geführt werden, in dem vermerkt wird, wie oft die Einheit bereits diese Zelle überfahren hat. Auf der Suche nach neuen Landmarken können im Anschluß beispielsweise solche Zellen bevorzugt werden, die noch nicht so oft von der Einheit überfahren wurden.

Figur 9 zeigt den geplanten Fahrweg FW einer autonomen mobilen Einheit AE. Der Planungshorizont N beträgt hier sieben Zellen. Dieser Fahrweg FW wird im Rahmen des lokalen Planungshorizontes und des Gitters in der Umgebung so gewählt, daß die von der Einheit ausführenden Aufgaben zu einem möglichst geringen Maluswert bzw. zu einem großen Bonuswert führen. Beispielsweise wird ein solcher Fahrweg bevorzugt, der einen besonders großen Bonuswert liefert. Solche Fahrwege FW vereinigen in besonders optimaler Weise die Kombination mehrerer Teilaufgaben.

Um die Berechnung bei der Planung des Fahrweges zu erleichtern, können verschiedene Orientierungen des Fahrzeuges diskret vorgegeben werden. Bei einem quadratisch gewählten Grundgitter umrunden acht Zellen eine zentrale Zelle, beispielsweise eine Ausgangszelle bei einem Bewegungsvorgang einer beweglichen mobilen Einheit. Eine sinnvolle Diskretisierung stellt hier also ein Winkel von 45° zwischen den einzelnen Orientierungen dar. Zur Fahrwegplanung müssen also ausgehend von einer Startzelle zu einer benachbarten Zelle jeweils nur acht Fälle untersucht werden. Bei einem hexagonalen Gitter beispielsweise würden sich nur sechs benachbarte Zellen ergeben und demgemäß sechs diskrete Fahrtrichtungen, die jeweils miteinander einen Winkel von 60° bilden.

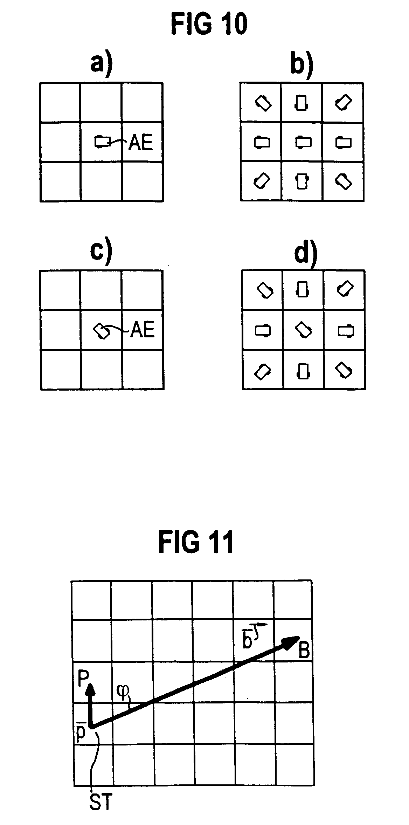

Figur 10 zeigt Beispiele für Fahrtrichtungen in einem quadratischen Grundgitter. In Figur 10a ist eine autonome mobile Einheit AE im Zentrum einer solchen Gitterstruktur zu erkennen. Figur 10b zeigt als Beispiel die Fahrtrichtungsänderungen, die eine solche Einheit durchführen kann und die im Rahmen einer Fahrwegplanung von einer Zelle zur nächsten Zelle zu untersuchen sind. Figur 10c und d gibt ein anderes Beispiel an. In Figur 10c wurde im Vergleich zur Figur 10a die Ausgangsposition anders gewählt, welches dann in Figur 10c andere Folgepositionen zur Folge hat. Wichtig ist es dabei zu beachten, daß beim Transfer von einer Zelle zu einer anderen Zelle die Fahrtrichtung entweder in einer diskreten Stufe gewechselt werden kann oder beibehalten werden kann. Weiterhin ist es wichtig zu berücksichtigen, daß der Einheit sowohl Vorwärts als auch Rückwärtsfahrt möglich ist, so daß insgesamt durch Vorwärts- und Rückwärts fahrt diese acht benachbarten Positionen von der Ausgangszelle aus erreicht werden können.

Der Fahrweg wird beispielsweise nach der Belegung der Gitterzellen durch das lokale Planungsgitter gesucht. Dabei wird versucht, den Aufgaben gemäß dem Anwender in Reihenfolge ihrer vorgegebenen Prioritäten gerecht zu werden. Ziel ist es dabei einen Weg zu finden, der einen resultierenden Nutzen zu Folge hat, welcher bei der Planungstiefe N maximal ist. Vom Planungshorizont N wird maßgeblich die benötigte Rechenzeit für die Wegesuche beeinflußt. Vorzugsweise liegt der Planungshorizont N zwischen 10 und 20. Bei einer Gittergröße von beispielsweise 30 x 30 cm ergibt sich ein Planungshorizont von 3 bis 6m.

Die Suche nach dem optimalen Weg startet beispielsweise in der Zentrumszelle des lokalen Gitters mit der entsprechenden Orientierung der autonomen mobilen Einheit. Alle Endkonfigurationen nach Suchschritt i dienen als Ausgangspunkte für den Suchschritt (i + 1). Für diese werden beispielsweise jeweils maximal acht mögliche Nachfolgekonfigurationen untersucht. Dafür die jeweils neuen resultierenden Nutzen $R_N$ bestimmt. Bei der Fahrwegplanung wird also ein neuer Fahrweg so gesucht, daß sich ausgehend von der Startzelle im Konfigurationsraum wellenförmig die durchsuchten Zellen ausbreiten. Nach N Suchschritten wird für den Fahrweg mit dem großen resultierenden Nutzen $R_N$ der Weg zur Startzelle zurückverfolgt. Der resultierende Nutzen kann dabei abhängig sein von den Bewertungsfunktionen B der unterschiedlichen Teilaufgaben und dem quasi gesammelten Nutzen entlang des Weges.

$$R_N = f(B_u, B_c, B_f)$$

Eine resultierende Nutzenfunktion hat prinzipiell folgendes Aussehen:

$$R_N = \alpha_u * B_u + \alpha_c * B_c + \alpha_f * B_f$$

Für alle Teilaufgaben werden entlang der getesteten Wege Nutzen gesammelt und entsprechend der Prioritäten gewichtet. Es können auch entlang des Weges Kosten entstehen (z.B. Positionsunsicherheit wächst, Stromverbrauch), die von den gesammelten Nutzen abgezogen werden können. Am Ende wird jener Weg ausgewählt, welcher abzüglich der Kosten den höchsten Nutzen bietet. Die Bewertungskritierien für die einzelnen Teilaufgaben werden in den folgenden Aufgaben beschrieben.

Figur 11 zeigt als Beispiel wie für eine benutzerdefinierte Aufgabe eine Kosten/Nutzenbetrachtung geführt werden kann. Die Einheit befindet sich beispielsweise in der Zelle ST. Beispielsweise ist B der Zielpunkt, welcher vom Benutzer vorgegeben wurde und P das nächste Teilziel im Rahmen der Fahrwegplanung. Die Vektoren $\vec{b}$ und $\vec{p}$ geben dabei die entsprechenden Richtungen zu den jeweiligen Punkten B und P an.

Um einen Nutzen angeben zu können, wird für die benutzerdefinierte Aufgabe beispielsweise die Abweichung eines jeden Wegstücks von der Richtung zum Zielpunkt bewertet. Der Teilnutzen für die jeweilige Fahrtrichtungsänderung ist deshalb abhängig vom aufgespannten Winkel dieser beiden Vektoren. Je kleiner beispielsweise dieser Winkel ist, um so größer ist der Nutzen in Bezug auf die benutzerdefinierte Aufgabe. Der resultierende Bewertungsfaktor, also der Teilnutzen wird beispielsweise maximal, wenn sich die Einheit immer in Zielpunktrichtung, d.h. in $\vec{b}$ Richtung bewegt.

$$B_u = \sum_{i=0}^{N-1} N_{ui}$$

$$N_{ui}(p) = \cos(\varphi) = \frac{\vec{b} \cdot \vec{p}}{|\vec{b}| \cdot |\vec{p}|}$$

Um die Positionsunsicherheit bewerten zu können, muß man die Unsicherheit am Ende eines Weges der Länge N, d.h. des Planungshorizontes bestimmen. Um die einzelnen Teilaufgaben der Einheit erfüllen zu können, muß diese Positionsunsicherheit am Ende des Weges möglichst klein sein. Sie darf zwar entlang des Weges zunehmen, sollte aber einen bestimmten Wert nicht überschreiten. Die Bewertungsfunktion der Konfigurationsunsicherheit ist beispielsweise nur abhängig von der Unsicherheit am Ende eines Weges der Länge N. Am Ende eines Weges soll diese klein sein; entlang des Weges darf die Unsicherheit auch größer sein. Als Bewertungskriterium wird die Spur sp(Q) der Unsicherheits-Kovarianzmatrix Q definiert.

$$Q(k) = \begin{bmatrix} \sigma_x^2 & \sigma_x \sigma_y & \sigma_x \sigma_\theta \\ \sigma_x \sigma_y & \sigma_y^2 & \sigma_y \sigma_\theta \\ \sigma_x \sigma_\theta & \sigma_y \sigma_\theta & \sigma_\theta^2 \end{bmatrix}$$

$$B_c = \frac{1}{sp(Q)}$$

$$B_c = \frac{1}{\sigma_x^2 + \sigma_y^2 + \sigma_\theta^2}$$

Je größer die Konfigurationssicherheit ist, um so kleiner ist beispielsweise der Nutzen am Ende dieses Weges. Beispielsweise wird der Nutzen hier nicht aufaddiert. Zur Auswertung wird lediglich die geschätzte Unsicherheit am Ende des Weges verwendet.

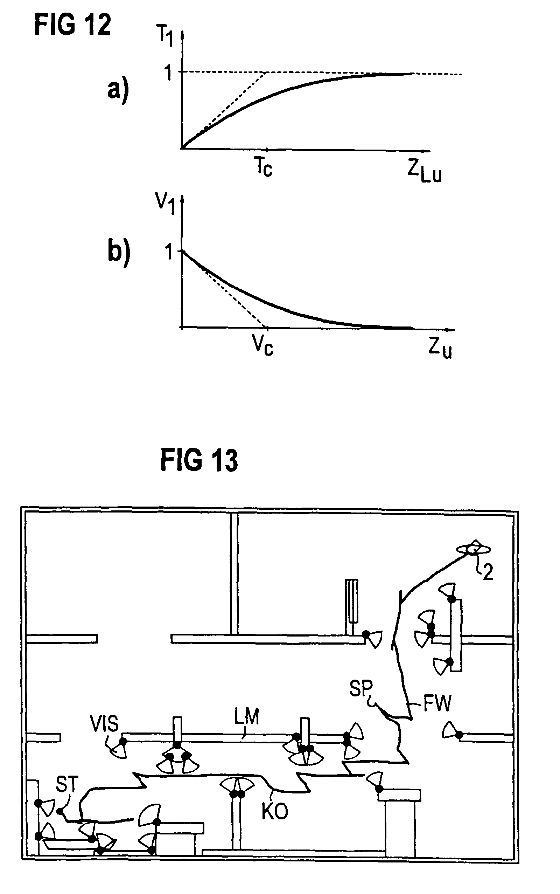

Figur 12 zeigt zwei Bewertungsfunktionen, die im Rahmen der Teilaufgabe des Kartenbildens Verwendung finden. Bei der Aufgabe des Landmarkenaufbaus können bei der Wegesuche (wie bei der benutzerdefinierten Aufgabe) Nutzen entlang des Weges gesammelt werden, d.h. von Gitterzelle zu Gitterzelle. Dabei kann der Nutzen je Gitterzelle sich wie folgt zusammensetzen:

$$N_{fi}=(V_i+T_i+O_i)*C_i$$

$$B_f = \sum_{i=0}^{N-1} N_{fi}$$

Beispielsweise hängt der Nutzen einer gerade besuchten Zelle davon ab, wie häufig diese Zelle schon von der Einheit überfahren wurde. Die Abhängigkeit kann beispielsweise so sein wie dies in Figur 12b angegeben wird. Die Zahl der Überfahrvorgänge ist dort mit ZU bezeichnet. Beispielsweise wird bei jedem Überfahren einer Zelle die Zahl $Z_u$ um 1 erhöht. Je öfter diese Zelle bereits überfahren wurde, desto geringer ist deren Nutzen beim Kartenaufbau, da eventuelle vorhandene Landmarken schon gefunden sein müßten. Mit Hilfe dieser Funktion, die in Figur 12b dargestellt ist, und mit $V_i$ bezeichnet ist, wird die autonome mobile Einheit in ein unbekanntes Gebiet getrieben, da nur dort ein Nutzen erlangt werden kann. Dadurch wird das Auffinden von unbekannten Landmarken in dem neuen Gebiet begünstigt. Sie lautet zum Beispiel:

$$V_i=e^{\frac{Z_u}{V_c}}$$

Ein weiterer Faktor, der bei der Kartenbildungsaufgabe berücksichtigt werden sollte, sind die unbestätigten Landmarken. Figur 12a gibt eine Funktion $T_i$ an, welche den Nutzen in Abhängigkeit der Anzahl sichtbarer vorläufiger Landmarken beschreibt. Die Funktion besagt beispielsweise, daß der Nutzen einer gesuchten Zelle um so größer wird, je mehr unbestätigte Landmarken von dieser Zelle aus gesehen werden können. Es wird also davon ausgegangen, daß die Einheit vorher schon in diesem Gebiet war und in ihrem Speicher die Daten von vorläufigen Landmarken abgelegt hat. Da diese Landmarken jedoch noch nicht häufig genug vermessen wurden, sind sie noch nicht bestätigt worden. Beim Landmarkenaufbau wird es daher von großem Nutzen sein, in die Sichtbarkeitsbereiche der vorläufigen Landmarken einzufahren, da in diesen Gebieten eine hohe Wahrscheinlichkeit besteht, neue bestätigte Landmarken zu finden, mit denen anschließend wieder eine Positionskorrektur durchgeführt werden kann. Die Einheit sammelt daher großen Nutzen, wenn sie durch Sichtbarkeitsbereiche von vorläufigen Landmarken fährt. Qualitativ lautet $T_i$ zum Beispiel:

$$T_i=1-e^{\frac{Z_{Lu}}{T_c}}$$

Die Funktionen, die in Figur 12a und 12b dargestellt werden, geben lediglich die qualitativen Zusammenhänge an und sollen keine absoluten Beschränkungen der Erfindung sein. Mit ihnen wird der aktuelle Stand der Entwicklung dargelegt. Weiterhin können für alle Zellen im Sichtbarkeitsbereich von vorläufigen Landmarken Vorzugsorientierungen abgespeichert sein. Bei der Fahrwegplanung und Fahrwegsuche wird die Übereinstimmung der aktuellen Orientierung mit der Vorzugsorientierung, die in der Zelle gespeichert ist, berücksichtigt. Stimmt die Orientierung der Einheit mit der Vorzugsrichtung überein, so gibt es beispielsweise einen zusätzlichen Nutzen. Ist die Anzahl der übereinstimmenden Richtungen größer, so wird auch der Nutzen, der dadurch erzielt wird, beispielsweise größer. Weiterhin kann es von Vorteil sein, einen Teilnutzen in der Form zu bestimmen, daß die je Zelle sichtbare Zahl von bereits bestätigten Landmarken als Gewichtungsfaktor verwendet wird. Und zwar kann dabei so vorgegangen werden, daß bereits vorhandene bestätigte Landmarken den Nutzen für den Landmarkenaufbau hemmen, da mehrere bestätigte Landmarken, die von einer Zelle aus gesehen werden können, ausreichen, um die Position der autonomen mobilen Einheit exakt bestimmbar zu machen. Es wäre also nicht erforderlich, weitere Landmarken aufzubauen und damit Rechenzeit und Speicherplatz zu vergeuden. Folgende Bewertungsformel für die einzelnen Teilnutzen eines Fahrweges in der Steuereinheit bieten sich an:

$$R_i = \alpha_u * B_{ui} + \alpha_f * B_{fi} + \alpha_c * (1 - B_{ci})$$

$$R_i = (\alpha_u * B_{ui} + \alpha_f * B_{fi}) * B_{ci}$$

Beispielsweise kann die Karte insgesamt ausgewertet werden, indem die Überlappung von Landmarken in Sichtbarkeitsbereichen bewertet werden. Beispielsweise kann dabei wie folgt vorgegangen werden: Bereiche in denen nur eine Landmarke gesehen werden kann, sollten noch näher untersucht werden, um weitere Landmarken zu finden. Bereiche, von denen aus zwei Landmarken gesehen werden können, sind ausreichend erforscht und es nicht erforderlich weitere Landmarken zu erforschen. Solche Bereiche, von denen aus noch keine Landmarke erkannt werden kann, müssen explizit nach eventuell vorhandenen natürlichen Landmarken abgesucht werden. Beispielsweise ist eine Umgebung erst vollständig erschlossen, wenn von jedem Punkt aus mehrere Landmarken gesehen werden können. Die Vollständigkeit ist aber nicht unbedingt erforderlich. Eine autonome mobile Einheit kann sich durchaus im Rahmen der Start-Zielrichtung in einer Umgebung orientieren, die lediglich um den Fahrweg herum bekannt ist. Um die Ressourcen der autonomen mobilen Einheit zu schonen, können Überlappungen der Landmarkensichtbarkeitsbereiche ausgewertet werden.

Figur 13 zeigt den Fahrweg einer autonomen mobilen Einheit von einem Startpunkt ST zu einem Ziel 2. Im einzelnen sind unterschiedliche Landmarken LM in der Umgebung enthalten, an denen der Fahrweg FW vorbeiführt. Weiterhin sind die Sichtbarkeitsbereiche VIS von verschiedenen charakteristischen Punkten und Landmarken dargestellt. Bei Betrachtung von Figur 13 ist zu berücksichtigen, daß die Umgebung der Einheit zu Beginn ihres Fahrweges im Startpunkt ST nicht bekannt ist. Um die verschiedensten Teilaufgaben zu erfüllen, werden entlang des Fahrweges und in einem lokalen Bereich Gitterzellen aufgebaut und diese mit Vorzugsfahrtrichtungen belegt. Die Teilaufgaben werden gemäß unterschiedlicher Kriterien bewertet und mit Hilfe von Prioritäten gewichtet. Beispielsweise kann an einem Ort KO erkannt werden, daß dort die autonome mobile Einheit in Richtung einer Landmarke gefahren ist, um die Positionsunsicherheit zu verringern. An einem zweiten Ort ST kann erkannt werden, daß dort wenig Landmarken vorhanden sind und deshalb in Richtung von verschiedenen Landmarken gefahren wurde, um die Positionsunsicherheit zu verringern bzw. um der Landkarte neue Landmarken hinzuzufügen.

**Patentansprüche**

1.  Verfahren zur Orientierung, Fahrwegplanung und -Steuerung einer autonomen mobilen Einheit,

    a) bei dem die Einheit (AE) mit einer ersten zu bewertenden Verrichtung (f) eine Umgebungskarte ihrer Umgebung erstellt, indem sie mit einer mitgeführten Sensoranordnung die Umgebung vermißt und Merkmale der Umgebung (1,2,3,4), welche ihr so bekannt werden, ausgehend von ihrer Eigenposition (x,y) auswertet und in Form von Landmarken (LM) in die Umgebungskarte einträgt,
    b) bei dem sich die Einheit (AE), mit einer zweiten zu bewertenden Verrichtung (u) in einer ihr nicht vollständig bekannten Umgebung von einem Startpunkt (ST) aus über mindestens ein Teilziel (tar) in Richtung eines Zielpunktes (go) bewegt und sich dabei zur Orientierung Fahrwegplanung und Steuerung mindestens der Umgebungskarte und der Sensoranordnung bedient,
    c) bei dem die Einheit mit einer dritten zu bewertenden Verrichtung (c), den auf Grund der Messungenauigkeit der Sensoranordnung vorhandenen Fehler bei der Bestimmung ihrer Eigenposition, als Positionsungenauigkeit (PU), überwacht, d) bei dem für jede zu bewertende Verrichtung (f, u, c), in Abhängigkeit des Beitrages ($R_0...R_m$), den sie dazu leistet, der Einheit das Erreichen des Zielpunktes (go) zu ermöglichen, mindestens jeweils ein Bonus- und/oder Maluswert ($B_f, C_f, B_u, C_u, B_c, C_c$) vergeben wird, wobei mindestens eine Zielrichtungsabweichung, und/oder ein großer Positionierungsfehler, und/oder eine geringe Anzahl von Landmarken in der Karte schlecht bewertet werden,
    e) und bei dem infolge einer gemeinsamen Auswertung der jeweiligen Bonus- und/oder Maluswerte ($B_f, C_f, B_u, C_u, B_c, C_c$) in einer Steuereinheit (opti) der Einheit (AE) mindestens die durchzuführende Verrichtung (f, u, c) bestimmt, sowie der Fahrweg der Einheit geplant und gesteuert wird.

2.  Verfahren nach Anspruch 1, bei dem mindestens für eine zu bewertende Verrichtung (f, u, c) ein Gewichtungsfaktor ($R_0...R_m$) dadurch gewonnen wird, daß die zugehörigen Bonus- und/oder Maluswerte ($B_f, C_f, B_u, C_u, B_c, C_c$) aufaddiert und mit einem für diese zu bewertende Verrichtung aktuell gültigen Notwendigkeitswert ($N_u$, $N_f$, $N_c$) multipliziert werden

3.  Verfahren nach einem der Ansprüche 1 bis 2, bei dem mindestens je zu bewertender Verrichtung (f, u, c) ein Schwellenwert für die Bonus- und/oder Maluswerte ($B_f,C_f$, $B_u,C_u$, $B_c,C_c$) festgelegt wird, bei dessen über- bzw. unterschreiten die zu bewertende Verrichtung (f, u, c) priorisiert durchgeführt wird.

4.  Verfahren nach einem der vorangehenden Ansprüche, bei dem zur Verringerung der Positionsunsicherheit (PU) gezielt eine Landmarke (1, 2) angefahren und vermessen wird, wobei der Einheit (AE) deren Lage in der Umgebung mit großer Genauigkeit bekannt ist.

5.  Verfahren nach einem der vorangehenden Ansprüche, bei dem mindestens ein Maluswert ($C_f$, $C_u$, $C_c$) davon abhängt, welche Wegstrecke (d) die Einheit (AE) zur Erledigung einer zu bewertenden Verrichtung (f, u, c) zurücklegen muß.

6.  Verfahren nach einem der voranstehenden Ansprüche, bei dem mindestens der Bonuswert für die zweite Verrichtung (u) von dem Winkel ($\phi$) abhängt, welchen eine gewählte Fahrtrichtung (ST-tar) mit der Start- Zielpunkt-Achse (ST-go) bildet.

7.  Verfahren nach Anspruch 3, bei dem mindestens der Bonuswert für die dritte Verrichtung ($B_c$) bezogen auf sich länglich erstreckende Landmarken (LM) davon abhängt wie groß die auf die Normale ($p_r$) der Landmarke (LM) projizierte Strecke ($W_c$) ist, die sich aus der Projektion einer Positionsunsicherheitsfläche (PU) um den Standort (Z) der Einheit (AE) ergibt.

8.  Verfahren nach einem der voranstehenden Ansprüche, bei dem gezielt eine Landmarke (3, 4) angefahren und vermessen wird, deren Lage (x, y) in der Umgebung der Einheit (AE) nur sehr ungenau bekannt ist.

9.  Verfahren nach einem der vorangehenden Ansprüche

    a) bei dem die autonome Einheit (AE) mit der ersten Verrichtung (f) eine zellular strukturierte Umgebungskarte ihrer Umgebung erstellt, wobei die Landmarken (LM) in Abhängigkeit der Anzahl sie betreffender Meßvorgänge und/oder der Anzahl der Orte von denen aus sie vermessen wurden als bestätigte und unbestätigte Landmarken (LM) unterschieden werden und je Zelle der Umgebungskarte mindestens folgende Informationen gespeichert werden:

    i) befindet sich von der Zelle aus gesehen eine Landmarke (LM) im Meßbereich eines von der Einheit (AE) mitgeführten Entfernungsmessers;
    ii) falls i) bejaht wird,

    -   Für bestätigte Landmarken (LM) die Entfernungs-Meßrichtung entlang einer Richtung zwischen der betreffenden Zelle und mindestens einer bestätigten Landmarke (LM)
    -   Für unbestätigte Landmarken (LM) die Fahrtrichtungsangabe entlang mindestens einer unbestätigten Landmarke (LM)

    iii) wie oft wurde die betreffende Zelle bereits überfahren

    b) bei dem ein Planungshorizont als eine Anzahl nacheinander zu durchfahrender Zellen vorgegeben wird,
    c) bei dem mögliche Fahrtrichtungen der Einheit (AE) in der Form diskretisiert werden, daß von einer gegebenen Zellenposition der Einheit aus jede unmittelbar benachbarte Zelle nur in jeweils einer diskreten Fahrtrichtung erreicht wird,
    d) und bei dem für den Planungshorizont alle mit Hilfe der diskreten Fahrtrichtungen kombinierbaren Fahrwege evaluiert werden, indem die jeweils anfallenden Bonus- und/oder Maluswerte ($B_f,C_f$, $B_u,C_u$, $B_c,C_c$) in der Steuereinheit (opti) der Einheit (AE) aufsummiert werden und derjenige Fahrweg gefahren wird, welcher den größten Bonus-, bzw. geringsten Maluswert erzielt.

10. Verfahren nach Anspruch 9, bei dem je Zelle inkrementierbare Belegungsgradwerte als Maß für die Wahrscheinlichkeit des Auftretens eines Hindernisses gespeichert werden.

11. Verfahren nach einem der Ansprüche 9 oder 10, bei dem die Zellen quadratisch sind und demgemäß acht Fahrtrichtungen betrachtet werden.

12. Verfahren nach einem der Ansprüche 9 oder 10, bei dem die Zellen hexagonal sind und demgemäß sechs Fahrtrichtungen betrachtet werden.

13. Verfahren nach einem der Ansprüche 9 bis 12, bei dem die kombinierbaren Fahrwege in einem Konfigurationsraum evaluiert werden, dessen Raumachsen durch den Planungshorizont in zwei Achsenrichtungen und die Zahl der diskreten Fahrtrichtungen in einer dritten Fahrtrichtung begrenzt werden, wobei in Richtung der Fahrtrichtungsachse für alle jeweils übereinander liegenden Zellen die gleichen Informationen aus Anspruch 9a) gespeichert werden.

14. Verfahren nach Anspruch 13, bei dem je Zelle des Konfigurationsraumes mindestens diejenige Fahrwegzellenfolge, welche den größten Bonus- und/oder geringsten Maluswert erzielt abgespeichert wird.

15. Verfahren nach einem der Ansprüche 9 bis 14, bei dem für eine Fahrwegkombination ein resultierender Nutzen als:

$$R_N = \alpha_u * B_u + \alpha_c * B_c + \alpha_f * B_f$$

bestimmt wird mit:

B: Teilnutzen
$\alpha$: Gewichtungsfaktor
Index: u: Zielfahrtaufgabe
       c: Positionsunsicherheitsüberwachungsaufgabe

f: Kartenbildungsaufgabe

wobei die einzelnen Teilnutzen sich wie folgt ergeben:

$$B_u = \sum_{i=0}^{N-1} N_{ui}$$

mit: $N_{ui}(p) = \cos(\varphi)$ als Teilnutzen für den Fahrweg von einer Zelle zur nächsten Zelle mit Teilziel P und $\varphi$ als Winkel zwischen der diskreten Fahrtrichtung und einer Start-Zielrichtung

$$B_c = \frac{1}{\sigma_x^2 + \sigma_y^2 + \sigma_\theta^2}$$

wobei $\sigma_x^2$ die Positionsunsicherheit in x-Richtung, $\sigma_y^2$ die Positionsunsicherheit in y-Richtung und $\sigma_\theta^2$ die Positionsunsicherheit in $\theta$-Richtung der Drehorientierung der Einheit angeben

$$B_f = \sum_{i=0}^{N-1} N_{fi}$$

mit:

$$N_{fi} = (V_i + T_i + O_i) * C_i$$

und $V_i$ als Funktionswert einer Funktion, welche abhängig von der Anzahl der Überfahrvorgänge einer Zelle bei zunehmender Anzahl eine immer kleinere reelle Zahl liefert, $T_i$ als Funktionswert einer Funktion, welche abhängig von der Anzahl der unbestätigten Landmarken, die von einer Zelle aus gesehen werden bei zunehmender Anzahl eine immer größere reelle Zahl liefert, sowie $O_i$ als Funktionswert einer Funktion, welche abhängig von der Übereinstimmung der aktuellen Fahrtrichtung mit einer für die Zelle gespeicherten Fahrtrichtung eine immer größere reelle Zahl liefert und $C_i$ als Funktionswert einer Funktion, welche abhängig von der Anzahl der bestätigten Landmarken, die von einer Zelle aus gesehen werden bei zunehmender Anzahl eine immer kleinere reelle Zahl liefert

**16.** Verfahren nach Anspruch 15, bei dem folgende Funktionen gelten:

$$V_i = e^{\frac{Z_u}{5}}$$

mit $Z_u$ als Anzahl der Überfahrten über die betrachtete Zelle

$$T_i = 1 - e^{\frac{Z_{Lu}}{3}}$$

mit $Z_{Lu}$ als Anzahl der sichtbaren unbestätigten Landmarken

$$O_i = 1 - e^{\frac{Z_F}{3}}$$

mit $Z_F$ als Anzahl der mit der aktuellen Fahrtrichtung der Einheit übereinstimmenden gespeicherten Fahrtrichtungen

$$C_i = e^{\frac{Z_{Lb}}{2}}$$

mit $Z_{Lb}$ als Anzahl der sichtbaren bestätigten Landmarken

**17.** Verfahren nach einem der Ansprüche 9 bis 16, bei dem der resultierende Nutzen für eine einzelne Zelle zu:

$$R_i = \alpha_u * B_{ui} + \alpha_f * B_{fi} + \alpha_c * (1 - B_{ci})$$

berechnet wird.

**18.** Verfahren nach einem der Ansprüche 9 bis 16, bei dem der resultierende Nutzen für eine einzelne Zelle zu:

$$R_i = (\alpha_u * B_{ui} + \alpha_f * B_{fi}) * B_{ci}$$

berechnet wird.

## Claims

**1.** Method for the orientation, route planning and control of an autonomous mobile unit,

a) in which the unit (AE) draws up a map of its surroundings in a first routine (f), to be assessed, by using an on-board sensor arrangement for surveying the surroundings and, starting from its own position (x, y), evaluating features of the surroundings (1, 2, 3, 4) which thus become known to it and entering them into the map of the surroundings in the form of landmarks (LM),

b) in which, in surroundings it does not know completely, the unit (AE) moves in a second routine (u), to be assessed, from a starting point (ST) via at least one partial goal (tar) in the direction of a destination (go) and in so doing makes use of at least the map of the surroundings and the sensor arrangement for the purpose of orientation, route planning and control,

c) in which in a third routine (c), to be assessed, the unit monitors the errors, present by virtue of the measuring inaccuracy of the sensor arrangement, in the determination of its own position, as positional inaccuracy (PU),

d) in which in each case at least one bonus value and/or penalty value ($B_f$, $C_f$, $B_u$, $C_u$, $B_c$, $C_c$) is allotted for each routine (f, u, c) to be assessed, as a function of the contribution ($R_O...R_m$) which they make in order to enable the unit to reach its destination (go), at least one deviation from the destination direction, and/or a major positioning error, and/or a small number of landmarks in the map being assessed as being wrong,

e) and in which as a consequence of a common evaluation of the respective bonus values and/or penalty values ($B_f$, $C_f$, $B_u$, $C_u$, $B_c$, $C_c$) in a control unit (opti) of the unit (AE) at least the routine (f, u, c) to be carried out is determined, and the route of the unit is planned and controlled.

2. Method according to Claim 1, in which at least for one routine (f,u,c) to be assessed a weighting factor ($R_O...R_m$) is obtained by adding up the associated bonus values and/or penalty values ($B_f$, $C_f$, $B_u$, $C_u$, $B_c$, $C_c$) and multiplying by a necessity value ($N_u$, $N_f$, $N_c$) currently valid for this routine to be assessed.

3. Method according to one of Claims 1 to 2, in which at least for each routine (f, u, c) to be assessed, a threshold value is fixed for the bonus values and/or penalty values ($B_f$, $C_f$, $B_u$, $C_u$, $B_c$, $C_c$) upon the overshooting or undershooting of which the routine (f, u, c) to be assessed is carried out in a prioritized fashion.

4. Method according to one of the preceding claims, in which in order to reduce the positional uncertainty (PU) a landmark (1, 2) is deliberately approached and surveyed, the unit (AE) knowing its location in the surroundings with great accuracy.

5. Method according to one of the preceding claims, in which at least one penalty value ($C_f$, $C_u$, $C_c$) is a function of which path distance (d) the unit (AE) must cover to perform a routine (f, u, c) to be assessed.

6. Method according to one of the preceding claims, in which at least the bonus value for the second routine (u) is a function of the angle ($\phi$) which is formed by a selected travel direction (ST-tar) with the start/destination axis (ST-go).

7. Method according to Claim 3, in which, referred to elongated landmarks (LM), at least the bonus value for the third routine ($B_c$) is a function of the magnitude of the segment ($W_c$) projected onto the normal ($p_r$) of the landmark (LM), which is produced by projecting a positional uncertainty area (PU) around the site (Z) of the unit (AE).

8. Method according to one of the preceding claims, in which a landmark (3, 4) whose position (x, y) in the surroundings of the unit (AE) is known only very inaccurately is deliberately approached and surveyed.

9. Method according to one of the preceding claims,

a) in which the autonomous unit (AE) draws up a cellularly structured map of its surroundings in the first routine (f), the landmarks (LM) being distinguished as confirmed and unconfirmed landmarks (LM) as a function of the number of measuring operations affecting them and/or of the number of the locations from which they were surveyed, and at least the following information is stored per cell of the map of the surroundings:

i) seen from the cell, is a landmark (LM) located in the measuring range of a distance meter on-board the unit (AE);
ii) if i) is answered affirmatively,

- for confirmed landmarks (LM): the direction of distance measurement along a direction between the affected cell and at least one confirmed landmark (LM)
- for unconfirmed landmarks (LM) : the travel direction along at least one unconfirmed landmark (LM)

iii) how often has the affected cell already been crossed,

b) in which a planning horizon is prescribed as a number of cells to be driven through in succession,
c) in which possible travel directions of a unit (AE) are discretized in such a way that, starting from a given cell position of the unit, each immediately adjacent cell is reached only in respectively one discrete travel direction,

d) and in which for the planning horizon all the routes which can be combined with the aid of the discrete travel directions are evaluated by adding up the respectively occurring bonus values and/or penalty values ($B_f$, $C_f$, $B_u$, $C_u$, $B_c$, $C_c$) in the control unit (opti) of the unit (AE) and that route is travelled which achieves the highest bonus value or lowest penalty value.

10. Method according to Claim 9, in which the degree-of-occupancy values which can be incremented per cell are stored as a measure of the probability of the occurrence of an obstacle.

11. Method according to one of Claims 9 or 10, in which the cells are square and consequently eight travel directions are considered.

12. Method according to one of Claims 9 or 10, in which the cells are hexagonal, and consequently six travel directions are considered.

13. Method according to one of Claims 9 to 12, in which the combined routes are evaluated in a configuration space whose space axes are bounded by the planning horizon in two axial directions, and the number of discrete travel directions is bounded in a third travel direction, the same information from Claim 9a) being stored in the direction of the travel direction axis for all respectively superimposed cells.

14. Method according to Claim 13, in which at least that route cell sequence which achieves the highest bonus value and/or lowest penalty value is stored per cell of the configuration space.

15. Method according to one of Claims 9 to 14, in which a resultant benefit for a route combination is determined as:

$$R_N = \alpha_u * B_u + \alpha_c * B_c + \alpha_f * B_f$$

with:

B:       partial benefit
$\alpha$:       weighting factor
index:   u:     task of driving to a goal
         c:     task of monitoring positional uncertainty
         f:     task of drawing up map

the individual partial benefits being yielded as follows:

$$B_u = \sum_{i=0}^{N-1} N_{ui}$$

with: $N_{ui}(p) = cos(\phi)$ as partial benefit for the route from one cell to the next cell with the partial goal P and $\phi$ as the angle between the discrete travel direction and a start/goal direction

$$B_c = \frac{1}{\sigma_x^2 + \sigma_y^2 + \sigma_\theta^2}$$

$\sigma_x^2$ specifying the positional uncertainty in the x-direction , $\sigma_y^2$ the positional uncertainty in the y-direction and $\sigma_\theta^2$ the positional uncertainty in the $\phi$-direction of the rotational orientation of the unit

$$B_f = \sum_{i=0}^{N-1} N_{fi}$$

with:

$$N_{fi} = (V_i + T_i + O_i) * C_i$$

and $V_i$ as the functional value of a function which, depending on the quantity of the crossing operations in a cell, supplies a real number which continually decreases with increasing quantity, $T_i$ as a functional value of a function which, depending on the quantity of the unconfirmed landmarks which are seen from a cell, supplies a real number which continually increases with increasing quantity, and $O_i$ as a functional value of a function which, depending on the correspondence between the actual travel direction and a travel direction stored for the cell, supplies a real number which continually increases with a travel direction stored for the cell, and $C_i$ as a functional value of a function which, depending on the quantity of the confirmed landmarks which are seen from a cell, delivers a continually decreasing real number with increasing quantity.

16. Method according to Claim 15, in which the following functions hold:

$$V_i = e^{\frac{Z_u}{5}}$$

with $Z_u$ as the quantity of the crossings of the cell considered

$$T_i = 1 - e^{\frac{Z_{Lu}}{3}}$$

with $Z_{Lu}$ as the quantity of the visible unconfirmed landmarks

$$O_i = 1 - e^{\frac{Z_F}{3}}$$

with $Z_F$ as the quantity of the stored travel directions corresponding to the current travel direction of a unit

$$C_i = e^{\frac{Z_{Lb}}{2}}$$

with $Z_{Lb}$ as the quantity of the visible confirmed landmarks.

17. Method according to one of Claims 9 to 16, in which the resultant benefit for an individual cell is calculated as:

$$R_i = \alpha_u * B_{ui} + \alpha_f * B_{fi} + \alpha_c * (1 - B_{ci})$$

18. Method according to one of Claims 9 to 16, in which the resultant benefit for an individual cell is calculated as:

$$R_i = \alpha_u * B_{ui} + \alpha_f * B_{fi}) * B_{ci}$$

**Revendications**

1. Procédé pour l'orientation, l'établissement d'un itinéraire et le pilotage d'une unité mobile autonome

a) dans lequel l'unité (AE) établit, dans le cadre de l'exécution d'une première tâche à évaluer (f), une carte de son environnement en mesurant l'environnement à l'aide d'un dispositif de détecteurs, qu'elle transporte avec elle, et en évaluant, à partir de sa propre position (x, y), des objets caractéristiques de l'environnement (1, 2 , 3, 4), qui, de cette façon, lui deviennent connus, et en les inscrivant, sous forme de repères (LM), dans la carte de l'environnement,

b) dans lequel l'unité (AE) se déplace, dans le cadre de l'exécution d'une deuxième tâche à évaluer (u), dans un environnement qu'elle ne connaît pas entièrement, à partir d'un point de départ (ST), en passant par au moins une destination intermédiaire (tar), en direction d'un point d'arrivée (go) et, à cet effet, utilise, pour son orientation, pour l'établissement de son itinéraire et son pilotage, au moins la carte de l'environnement et le dispositif de détecteurs,

c) dans lequel l'unité surveille, dans le cadre de l'exécution d'une troisième tâche à évaluer (c), l'erreur de détermination de sa propre position, provenant du manque de précision du dispositif de détecteurs et considérée comme imprécision de position (PU),

d) dans lequel, pour l'exécution de chaque tâche à évaluer (f, u, c), au moins une note d'appréciation positive ou négative ($B_f$, $C_f$, $B_u$, $C_u$, $B_c$, $C_c$) est attribuée, en fonction de la contribution ($R_0$ ... $R_m$) qu'elle apporte pour permettre à l'unité d'atteindre le point d'arrivée (go), au moins une déviation de direction par rapport à l'arrivée et/ou une erreur importante de positionnement et/ou un petit nombre de repères sur la carte provoquant une appréciation négative, et

e) dans lequel, à la suite de l'analyse de toutes les notes respectives d'appréciation, positives et négatives, ($B_f$, $C_f$, $B_u$, $C_u$, $B_c$, $C_c$) dans l'unité de pilotage (opti) de l'unité (AE), au moins la tâche à exécuter (f, u, c) est déterminée, l'itinéraire de l'unité est établi et l'unité (AE) est pilotée.

2. Procédé, conforme à la revendication 1,
dans lequel, au moins pour l'exécution d'une tâche à évaluer (f, u, c), un facteur de pondération ($R_0$ ... $R_m$) est obtenu en additionnant les notes correspondantes d'appréciation, positives et/ou négatives, ($B_f$, $C_f$, $B_u$, $C_u$, $B_c$, $C_c$) et en les multipliant avec une valeur de nécessité ($N_u$, $N_f$, $N_c$), valable actuellement pour l'exécution de la tâche à évaluer.

3. Procédé, conforme à l'une des revendications 1 à 2,
dans lequel, au moins pour l'exécution de chacune des tâches à évaluer (f, u, c), une valeur seuil est fixée pour les notes d'appréciation positives et/ou négatives ($B_f$, $C_f$, $B_u$, $C_u$, $B_c$, $C_c$) pour laquelle, lorsqu'elle est dépassée vers le haut ou, respectivement, vers le bas, l'exécution de la tâche à évaluer (f, u, c) devient prioritaire.

4. Procédé, conforme à l'une des revendications précédentes,
dans lequel, pour la réduction de l'incertitude de position (PU), l'unité se dirige, de manière spécifique, vers un repère (1, 2) et procède à son métrage, sa position dans l'environnement étant connue par l'unité (AE) avec une grande précision.

5. Procédé, conforme à l'une des revendications précédentes,
dans lequel au moins une note d'appréciation négative ($C_f$, $C_u$, $C_c$) dépend de la portion de trajet (d) que l'unité (AE) doit parcourir pour exécuter une des tâches à évaluer (f, u, c).

6. Procédé, conforme à l'une des revendications précédentes,
dans lequel au moins la note d'appréciation positive pour l'exécution de la deuxième tâche (u) dépend de l'angle ($\phi$) que la direction de déplacement choisie (ST-tar) forme avec l'axe point de départ / point d'arrivée (ST-go).

7. Procédé, conforme à la revendication 3,
dans lequel au moins la note d'appréciation positive pour l'exécution de la troisième tâche ($B_c$), appliquée à des repères oblongs (LM), dépend de la longueur du segment ($W_c$) projeté sur la perpendiculaire (pr) du repère (LM), ce segment étant obtenu par la projection d'une surface d'incertitude de position (PU) autour de l'endroit (Z) où se trouve l'unité (AE).

8. Procédé, conforme à une des revendications précédentes,
dans lequel l'unité (AE) se dirige, d'une façon spécifique, vers un repère (3, 4) et procède à son métrage, la position (x, y) de ce repère dans l'environnement de l'unité (AE) n'étant connue que d'une façon très imprécise.

9. Procédé, conforme à l'une des revendications précédentes,

a) dans lequel l'unité autonome (AE), par l'exécution de la première tâche (f), établit une carte de son environnement structurée d'une façon cellulaire, alors qu'on différencie les repères (LM), en fonction du nombre de processus de mesure les concemant et/ou en fonction du nombre d'endroits à partir desquels ils ont été métrés, comme repères (LM) confirmés et comme repères (LM) non confirmés et qu'on enregistre dans chaque cellule de la carte de l'environnement au moins les informations suivantes:

i) est-ce qu'il y a, vu de la cellule, un repère (LM) dans la zone de mesure d'un détecteur de mesure d'éloignement transporté par l'unité (AE);

ii) dans le cas où la réponse à la question i) est positive,

- pour des repères (LM) confirmés, la direction de mesure d'éloignement le long d'une direction entre la cellule concernée et, au moins, un repère (LM) confirmé
- pour des repères (LM) non confirmés, l'indication d'une direction de déplacement le long, au moins, d'un repère (LM) non confirmé

iii) combien de fois la cellule concernée a-t-elle été traversée

b) dans lequel un horizon de planification est fixé sous forme d'un nombre de cellules à traverser l'une après l'autre

c) dans lequel des directions possibles de déplacement de l'unité (AE) sont particularisées de façon que, à partir d'une position donnée de l'unité dans une cellule, toute cellule immédiatement voisine ne peut être atteinte que dans une direction particularisée de déplacement correspondante, et

d) dans lequel, pour l'horizon de planification, tous les trajets de déplacement, qui peuvent être combinés à l'aide des directions particularisées de déplacement, sont évalués en additionnant, dans l'unité de pilotage (opti) de l'unité (AE), les notes d'évaluation positives et/ou négatives attribuées respectivement ($B_f$, $C_f$, $B_u$, $C_u$, $B_c$, $C_c$) et suivant l'itinéraire qui bénéficie de la note d'évaluation positive la plus élevée ou de la note d'évaluation négative la plus faible.

**10.** Procédé, conforme à la revendication 9,
dans lequel des valeurs de taux d'occupation, qui peuvent être incrémentés par cellule, sont enregistrés comme mesure pour la probabilité d'apparition d'un obstacle.

**11.** Procédé, conforme à une des revendications 9 ou 10,
dans lequel les cellules sont carrées et dans lequel, en conséquence, on peut considérer huit directions de déplacement.

**12.** Procédé, conforme à une des revendications 9 ou 10,
dans lequel les cellules sont hexagonales et dans lequel, en conséquence, on peut considérer six directions de déplacement.

**13.** Procédé, conforme à une des revendications 9 à 12,
dans lequel les voies de déplacement, qui peuvent être combinées, sont évaluées dans un espace de configuration dont les axes spatiaux sont limités, par l'horizon de planification, à deux directions axiales et dont le nombre de directions spécifiques de déplacement sont limitées dans une troisième direction de déplacement, les mêmes informations que dans la revendication 9 a) étant enregistrées pour toutes les cellules se trouvant respectivement l'une au dessus de l'autre dans la direction de l'axe de la direction de déplacement.

**14.** Procédé, conforme à la revendication 13,
dans lequel on enregistre, pour chaque cellule de l'espace de configuration, au moins la série de cellules de l'itinéraire qui bénéficie de la note d'évaluation positive la plus élevée ou de la note d'évaluation négative la plus faible.

**15.** Procédé, conforme à une des revendications 9 à 14,
dans lequel on définit, pour une combinaison d'itinéraire, un avantage résultant par:

$$R_N = \alpha_u{}^*B_u + \alpha_c{}^*B_c + \alpha_f{}^*B_f,$$

relation dans laquelle signifient:

B:            avantage partiel

α: facteur de pondération
indices: u: tâche "déplacement vers l'arrivée"
c: tâche "contrôle de l'incertitude de position"
f: tâche "établissement de la carte"

les divers avantages partiels étant donnés par:

$$B_u = \sum_{i=0}^{N-1} N_{ui}$$

avec $N_{ui}(p) = \cos(\varphi)$ comme avantage partiel pour le trajet d'une cellule jusqu'à la cellule suivante avec la destination intermédiaire P et $\varphi$ comme angle entre la direction de déplacement spécifique et une direction point de départ / point d'arrivée,

$$B_c = \frac{1}{\sigma_x^2 + \sigma_y^2 + \sigma_\theta^2},$$

relation dans laquelle $\sigma_x^2$ désigne l'incertitude de position dans la direction x, $\sigma_y^2$, l'incertitude de position dans la direction y et $\sigma_\theta^2$, l'incertitude de position dans la direction θ de l'orientation rotative de l'unité et

$$B_f = \sum_{i=0}^{N-1} N_{fi}$$

avec:

$$N_{fi} = (V_i + T_i + O_i)^\star C_i$$

et $V_i$ comme valeur d'une fonction qui, en fonction du nombre de processus de traversée d'une cellule et dans le cas où ce nombre augmente, fournit un nombre réel de plus en plus petit, $T_i$ comme valeur d'une fonction qui, en fonction du nombre des repères non confirmés, qui sont vus à partir d'une cellule, et dans le cas où ce nombre augmente, fournit un nombre réel de plus en plus grand, ainsi que $O_i$ comme valeur d'une fonction qui, en fonction de la concordance de la direction actuelle de déplacement avec une direction de déplacement enregistrée pour la cellule, fournit un nombre réel de plus en plus grand et $C_i$ comme valeur d'une fonction qui, en fonction du nombre de repères confirmés, qui sont vus à partir d'une cellule, et dans le cas où ce nombre augmente, fournit un nombre réel de plus en plus petit.

16. Procédé, conforme à la revendication 15,
dans lequel les fonctions suivantes sont valables:

$$V_i = e^{Z_u/5}$$

avec $Z_u$ comme nombre de passages à travers la cellule considérée

$$T_i = 1 - e^{Z_{Lu}/3}$$

avec $Z_{Lu}$ comme nombre des repères non confirmés visibles

$$O_i = 1 - e^{Z_F/3}$$

avec $Z_F$ comme nombre des directions de déplacement enregistrées qui concordent avec la direction actuelle de déplacement de l'unité:

$$C_i = e^{\,Z_{Lb}/2}$$

avec $Z_{Lb}$ comme nombre des repères confirmés visibles

17. Procédé, conforme à une des revendications 9 à 16, dans lequel l'avantage résultant pour une cellule déterminée est donné par:

$$R_i = \alpha_u * B_{ui} + \alpha_f * B_{fi} + \alpha_c * (1 - B_{ci})$$

18. Procédé, conforme à une des revendications 9 à 16, dans lequel l'avantage résultant pour une cellule déterminée est donné par:

$$R_i = (\alpha_u * B_{ui} + \alpha_f * B_{fi}) * B_{ci}$$

## FIG 1

## FIG 2

## FIG 3

## FIG 4

# FIG 5

# FIG 6

# FIG 7

**FIG 8**

**a)**

**b)**

**c)**

**FIG 9**

# FIG 10

### a)

### b)

### c)

### d)

# FIG 11

**FIG 12**

a)

b)

**FIG 13**